(19) Europäisches Patentamt

European Patent Office

Office européen des brevets

(11) **EP 4 505 787 B1**

(12) **EUROPEAN PATENT SPECIFICATION**

(45) Date of publication and mention
of the grant of the patent:
**01.10.2025 Bulletin 2025/40**

(21) Application number: **22785685.3**

(22) Date of filing: **12.08.2022**

(51) International Patent Classification (IPC):
*H04W 24/10* (2009.01)    *H04L 5/00* (2006.01)
*H04W 72/04* (2023.01)

(52) Cooperative Patent Classification (CPC):
**H04W 24/10; H04L 5/0048;** H04L 5/0057;
H04W 8/24; H04W 72/23

(86) International application number:
**PCT/CN2022/112265**

(87) International publication number:
**WO 2024/031683 (15.02.2024 Gazette 2024/07)**

(54) **TIME DOMAIN CHANNEL PROPERTY REPORTING**

ZEITBEREICHSKANALEIGENSCHAFTSMELDUNG

RAPPORT DE PROPRIÉTÉ DE CANAL DANS LE DOMAINE TEMPOREL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.02.2025 Bulletin 2025/07**

(60) Divisional application:
**25180160.1 / 4 586 717**

(73) Proprietor: **Google LLC
Mountain View, CA 94043 (US)**

(72) Inventors:
• **LIOU, Jia-Hong
Taipei City 10548 (TW)**
• **WU, Chih-Hsiang
Taipei City 10548 (TW)**
• **ZHANG, Yushu
Beijing 100190 (CN)**

(74) Representative: **Marks & Clerk GST
1 New York Street
Manchester M1 4HD (GB)**

(56) References cited:
**WO-A1-2017/171928    WO-A1-2022/162507
US-A1- 2019 165 847**

• **NOKIA ET AL: "CSI enhancement for high/
medium UE velocities and CJT", vol. RAN WG1,
no. e-Meeting; 20220509 - 20220520, 29 April
2022 (2022-04-29), XP052153577, Retrieved from
the Internet <URL:https://ftp.3gpp.org/tsg_ran/
WG1_RL1/TSGR1_109-e/Docs/R1-2204540.zip
R1-2204540_Rel-18 CSI enhancement.docx>
[retrieved on 20220429]**
• **CATT: "On Rel-18 CSI enhancements", vol. RAN
WG1, no. e-Meeting; 20220509 - 20220520, 29
April 2022 (2022-04-29), XP052152975, Retrieved
from the Internet <URL:https://ftp.3gpp.org/
tsg_ran/WG1_RL1/TSGR1_109-e/Docs/
R1-2203443.zip R1-2203443.docx> [retrieved on
20220429]**

## Description

### TECHNICAL FIELD

The present disclosure relates generally to wireless communication, and more particularly, to time domain channel property (TDCP) measurement and reporting techniques.

### BACKGROUND

The Third Generation Partnership Project (3GPP) specifies a radio interface referred to as fifth generation (5G) new radio (NR) (5G NR). An architecture for a 5G NR wireless communication system can include a 5G core (5GC) network, a 5G radio access network (5G-RAN), a user equipment (UE), etc. The 5G NR architecture might provide increased data rates, decreased latency, and/or increased capacity compared to other types of wireless communication systems. The documents "CSI enhancement for high/medium UE velocities and CJT" (Nokia et al.), 3GPP Draft - R1-2204540, 3rd Generation Partnership Project, vol. RAN WG1, no. e-Meeting; 20220509 - 20220520 and "On Rel-18 CSI enhancements", 3GPP Draft; R1-2203443, 3rd Generation Partnership Project (CATT), vol. RAN WG1, no. e-Meeting; 20220509 - 20220520 29 April 2022 (2022-04-29),XP052152975 relate to this radio interface.

Wireless communication systems, in general, may be configured to provide various telecommunication services (e.g., telephony, video, data, messaging, broadcasts, etc.) based on multiple-access technologies, such as orthogonal frequency division multiple access (OFDMA) technologies, that support communication with multiple UEs. As mobile broadband technologies evolve, improvements in mobile broadband have been useful to continue the progression of such technologies. For example, a user equipment (UE) that is moving relative to a base station might experience a phase shift in a channel path between the UE and the base station that causes a quality of the channel path to degrade. WO 2022/162507 proposes apparatuses, methods, and systems for configuring tracking reference signal resources. One method includes receiving an indication of a HST SFN transmission from at least one TRP in a network. The method includes configuring the UE with two TRS resources. The method includes receiving a downlink scheduling grant that includes a TCI codepoint indicating two TCI states corresponding to the two TRS resources. The method includes configuring the UE to report at least one Doppler indicator value to the network based on received TRSs. The method includes identifying the at least one Doppler indicator value. The method includes reporting the at least one Doppler indicator value to the network. The method includes receiving (514) at least one DMRS port corresponding to each layer of a PDSCH, PDCCH, or a combination thereof. US2019/165847 proposes a method of reporting, by a UE, CSI in a wireless communication system, the method comprising: receiving, from a base station, a RRC signaling that comprises a plurality of reporting settings, wherein each reporting setting comprises a corresponding list of first values representing time offsets for transmitting a CSI report, forming a plurality of lists of first values; receiving, from the base station, DCI triggering the CSI report, wherein the DCI comprises an index value related to a time at which to transmit the CSI report on a PUSCH; determining, based on the DCI, a plurality of list entries; determining a second value that is largest among the plurality of list entries; and transmitting, to the base station, the CSI report on the PUSCH based on the second value. WO 2017/171928 proposes mechanisms for a legacy UE traveling at a high speed (e.g., in a high speed train) to network-assisted mobility status indication and tracking for a UE traveling at a high speed (e.g., in a high speed train). It also provides for monitoring an uplink (UL) transmission signal received from a User Equipment (UE) in the SFN at a plurality of remote radio heads (RRHs). A mobility status of the UE according to the UL transmission signal may be determined. Channel propagation conditions and mobility status may be sent in a downlink transmission signal for transmission to the UE.

### BRIEF SUMMARY

The following presents a simplified summary of one or more aspects in order to provide a basic understanding of such aspects. This summary is not an extensive overview of all contemplated aspects. This summary neither identifies key or critical elements of all aspects nor delineates the scope of any or all aspects. Its sole purpose is to present some concepts of one or more aspects in a simplified form as a prelude to the more detailed description that is presented later.

A phase shift in a channel path between a user equipment (UE) and a network entity, such as a base station, may be based on a moving speed of the UE toward or away from the network entity, a carrier frequency, an angle of arrival (AoA) for the channel path, etc. Although each channel path of a multi-path channel might be associated with a same speed of the UE and a same carrier frequency, different AoAs for different channels paths of a multi-path channel might create different phase shifts for each channel path.

The UE may receive a tracking reference signal (TRS) from the network entity to perform time and frequency offset tracking, such as Doppler shift estimations and/or Doppler spread estimations associated with downlink decoding. However, after the UE receives and measures the TRS from the network entity, the UE might not be configured to report time domain channel properties (TDCPs), to the network entity, based on the TRS. That is, the UE may internally utilize the measured TDCPs (e.g., Doppler shift estimations and/or Doppler spread estimations) without indicating the measured TDCPs to the network entity. Meanwhile, the network entity relies on channel state information (CSI) measured and reported by the UE to perform procedures such as downlink scheduling. For example, in a multiple-input multiple-output (MIMO) system, the network entity may indicate a digital precoder to the UE based on a CSI report received from the UE. However, if the UE is moving at an increased rate of speed relative to the network entity (e.g., large Doppler shift), the CSI report received from the UE may not be sufficiently reliable for the network entity to efficiently schedule downlink transmissions for the UE, which may result in reduced transmission efficiency between the network entity and the UE.

Aspects of the present disclosure address the above-noted and other deficiencies by configuring the UE to transmit a TDCP report to the network entity for assisting the network entity with downlink scheduling procedures for the UE in accordance with appended claim 1, a corresponding method at the network entity in accordance with claim 13 and an apparatus in accordance with claim 15.

According to some aspects, the UE receives a TRS from a network entity through a channel between the network entity and the UE. The UE measures, based on the received TRS, a TDCP of the channel between the network entity and the UE. A measurement of the TDCP of the channel is associated with at least one of: a configured reporting quantity for a TDCP report or a CSI processing unit duration for the TDCP report. The UE transmits the TDCP report to the network entity based on the measuring of the TDCP of the channel based on the received TRS.

According to some aspects, the network entity transmits a TRS to a UE through a channel between the UE and the network entity. The network entity receives, from the UE based on the transmitted TRS, a TDCP report indicative of a measurement of the TDCP of the channel between the UE and the network entity. The measurement of the TDCP of the channel is associated with at least one of: a configured reporting quantity for the TDCP report or a CSI processing unit duration for the TDCP report.

To the accomplishment of the foregoing and related ends, the one or more aspects correspond to the features hereinafter described and particularly pointed out in the claims. The one or more aspects may be implemented through any of an apparatus, a method, a means for performing the method, and/or a non-transitory computer-readable medium. The following description and the drawings set forth in detail certain illustrative features of the one or more aspects. These features are indicative, however, of but a few of the various ways in which the principles of various aspects may be employed.

## BRIEF DESCRIPTION OF THE DRAWINGS

FIG. 1 illustrates a diagram of a wireless communications system including a plurality of network entities in communication over a plurality of cells.

FIG. 2A illustrates a first timing diagram for a first channel state information (CSI) processing unit duration associated with periodic/semi-persistent CSI reporting.

FIG. 2B illustrates a second timing diagram for a second CSI processing unit duration associated with aperiodic CSI reporting.

FIG. 3 is a signaling diagram illustrating communications between a user equipment (UE) and a network entity for a time domain channel property (TDCP) measurement and reporting procedure.

FIGs. 4A-4C illustrate a plurality of tables that include example TDCP report information transmitted from the UE to the network entity.

FIG. 5 is a flowchart of a method of TDCP reporting at a UE.

FIG. 6 is a flowchart of a method of TDCP reporting at a network entity.

FIG. 7 is a diagram illustrating an example of a hardware implementation for an example UE apparatus.

FIG. 8 is a diagram illustrating an example of a hardware implementation for one or more example network entities.

## DETAILED DESCRIPTION

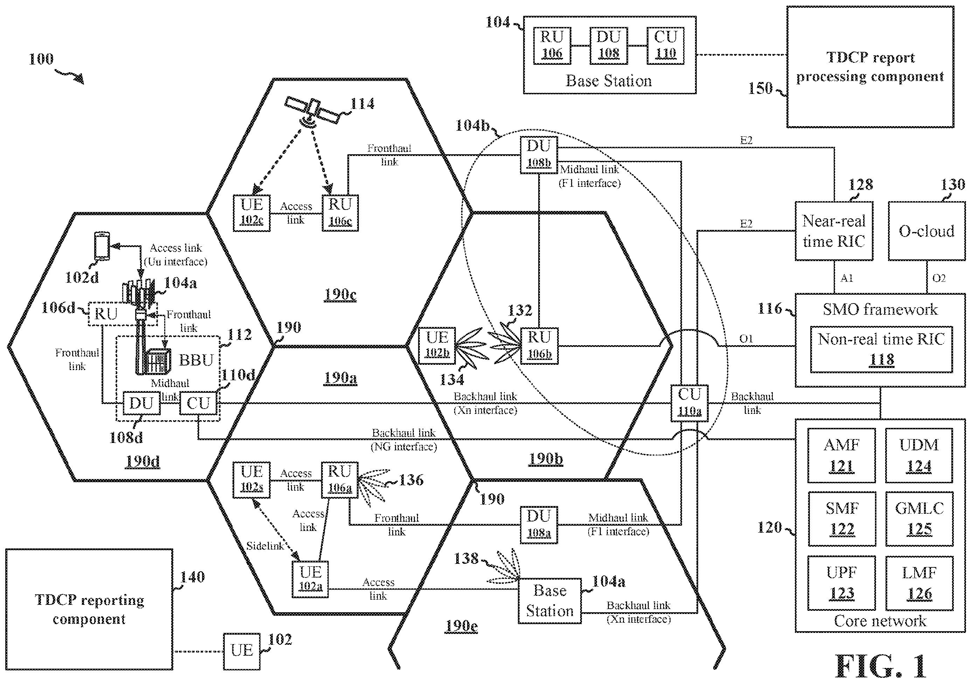

FIG. 1 illustrates a diagram 100 of a wireless communications system associated with a plurality of cells 190. The wireless communications system includes user equipments (UEs) 102 and base stations 104, where some base stations 104a include an aggregated base station architecture and other base stations 104b include a disaggregated base station architecture. The aggregated base station architecture includes a radio unit (RU) 106, a distributed unit (DU) 108, and a centralized unit (CU) 110 that are configured to utilize a radio protocol stack that is physically or logically integrated within a single radio access network (RAN) node. A disaggregated base station architecture utilizes a protocol stack that is physically or logically distributed among two or more units (e.g., RUs 106, DUs 108, CUs 110). For example, a CU 110 is implemented within a RAN node, and one or more DUs 108 may be co-located with the CU 110, or alternatively, may be geographically or virtually distributed throughout one or multiple other RAN nodes. The DUs 108 may be implemented to communicate with one or more RUs 106. Each of the RU 106, the DU 108 and the CU 110 can be implemented as virtual units, such as a virtual radio unit (VRU), a virtual distributed unit (VDU), or a virtual central unit (VCU).

Operations of the base stations 104 and/or network designs may be based on aggregation characteristics of base station functionality. For example, disaggregated base station architectures are utilized in an integrated access backhaul (IAB) network, an open-radio access network (O-RAN) network, or a virtualized radio access network (vRAN) which may also be referred to a cloud radio access network (C-RAN). Disaggregation may include distributing functionality across the two or more units at various physical locations, as well as distributing functionality for at least one unit virtually, which can enable flexibility in network designs. The various units of the disaggregated base station architecture, or the disaggregated RAN architecture, can be configured for wired or wireless communication with at least one other unit. For example, the CU 110a communicates with the DUs 108a-108b via respective midhaul links based on F1 interfaces. The DUs 108a-108b may respectively communicate with the RU 106a and the RUs 106b-106c via respective fronthaul links. The RUs 106a-106c may communicate with respective UEs 102a-102c and 102s via one or more radio frequency (RF) access links based on a Uu interface. In examples, multiple RUs 106 and/or base stations 104 may simultaneously serve the UEs 102, such as the UE 102a of the cell 190a that the access links for the RU 106a of the cell 190a and the base station 104a of the cell 190e simultaneously serve.

One or more CUs 110, such as the CU 110a or the CU 110d, may communicate directly with a core network 120 via a backhaul link. For example, the CU 110d communicates with the core network 120 over a backhaul link based on a next generation (NG) interface. The one or more CUs 110 may also communicate indirectly with the core network 120 through one or more disaggregated base station units, such as a near-real time RAN intelligent controller (RIC) 128 via an E2 link and a service management and orchestration (SMO) framework 116, which may be associated with a non-real time RIC 118. The near-real time RIC 128 might communicate with the SMO framework 116 and/or the non-real time RIC 118 via an A1 link. The SMO framework 116 and/or the non-real time RIC 118 might also communicate with an open cloud (O-cloud) 130 via an O2 link. The one or more CUs 110 may further communicate with each other over a backhaul link based on an Xn interface. For example, the CU 110d of the base station 104a communicates with the CU 110a of the base station 104b over the backhaul link based on the Xn interface. Similarly, the base station 104a of the cell 190e may communicate with the CU 110a of the base station 104b over a backhaul link based on the Xn interface.

The RUs 106, the DUs 108, and the CUs 110, as well as the near-real time RIC 128, the non-real time RIC 118, and/or the SMO framework 116, may include (or may be coupled to) one or more interfaces configured to transmit or receive information/signals via a wired or wireless transmission medium. A base station 104 or any of the one or more disaggregated base station units can be configured to communicate with one or more other base stations 104 or one or more other disaggregated base station units via the wired or wireless transmission medium. In examples, a processor, a memory, and/or a controller associated with executable instructions for the interfaces can be configured to provide communication between the base stations 104 and/or the one or more disaggregated base station units via the wired or wireless transmission medium. For example, a wired interface can be configured to transmit or receive the information/signals over a wired transmission medium, such as for the fronthaul link between the RU 106d and the baseband unit (BBU) 112 of the cell 190d or, more specifically, the fronthaul link between the RU 106d and DU 108d. The BBU 112 includes the DU 108d and a CU 110d, which may also have a wired interface configured between the DU 108d and the CU 110d to transmit or receive the information/signals between the DU 108d and the CU 110d based on a midhaul link. In further examples, a wireless interface, which may include a receiver, a transmitter, or a transceiver (such as an RF transceiver), can be configured to transmit or receive the information/signals via the wireless transmission medium, such as for information communicated between the RU 106a of the cell 190a and the base station 104a of the cell 190e via cross-cell communication beams of the RU 106a and the base station 104a.

One or more higher layer control functions, such as function related to radio resource control (RRC), packet data convergence protocol (PDCP), service data adaptation protocol (SDAP), and the like, may be hosted at the CU 110. Each control function may be associated with an interface for communicating signals based on one or more other control functions hosted at the CU 110. User plane functionality such as central unit-user plane (CU-UP) functionality, control plane functionality such as central unit-control plane (CU-CP) functionality, or a combination thereof may be implemented based on the CU 110. For example, the CU 110 can include a logical split between one or more CU-UP procedures and/or one or more CU-CP procedures. The CU-UP functionality may be based on bidirectional communication with the CU-CP functionality via an interface, such as an E1 interface (not shown), when implemented in an O-RAN configuration.

The CU 110 may communicate with the DU 108 for network control and signaling. The DU 108 is a logical unit of the base station 104 configured to perform one or more base station functionalities. For example, the DU 108 can control the operations of one or more RUs 106. One or more of a radio link control (RLC) layer, a medium access control (MAC) layer, or one or more higher physical (PHY) layers, such as forward error correction (FEC) modules for encoding/decoding, scrambling, modulation/demodulation, or the like can be hosted at the DU 108. The DU 108 may host such functionalities based on a functional split of the DU 108. The DU 108 may similarly host one or more lower PHY layers, where each lower layer or module may be implemented based on an interface for communications with other layers and modules hosted at the DU 108, or based on control functions hosted at the CU 110.

The RUs 106 may be configured to implement lower layer functionality. For example, the RU 106 is controlled by the DU 108 and may correspond to a logical node that hosts RF processing functions, or lower layer PHY functionality, such as execution of fast Fourier transform (FFT), inverse FFT (iFFT), digital beamforming, physical random access channel (PRACH) extraction and filtering, etc. The functionality of the RUs 106 may be based on the functional split, such as a functional split of lower layers.

The RUs 106 may transmit or receive over-the-air (OTA) communication with one or more UEs 102. For example, the RU 106b of the cell 190b communicates with the UE 102b of the cell 190b via a first set of communication beams 132 of the RU 106b and a second set of communication beams 134 of the UE 102b, which may correspond to inter-cell communication beams or cross-cell communication beams. Both real-time and non-real-time features of control plane and user plane communications of the RUs 106 can be controlled by associated DUs 108. Accordingly, the DUs 108 and the CUs 110 can be utilized in a cloud-based RAN architecture, such as a vRAN architecture, whereas the SMO framework 116 can be utilized to support non-virtualized and virtualized RAN network elements. For non-virtualized network elements, the SMO framework 116 may support deployment of dedicated physical resources for RAN coverage, where the dedicated physical resources may be managed through an operations and maintenance interface, such as an O1 interface. For virtualized network elements, the SMO Framework 116 may interact with a cloud computing platform, such as the O-cloud 130 via the O2 link (e.g., cloud computing platform interface), to manage the network elements. Virtualized network elements can include, but are not limited to, RUs 106, DUs 108, CUs 110, near-real time RICs 128, etc.

The SMO framework 116 may be configured to utilize an O1 link to communicate directly with one or more RUs 106. The non-real time RIC 118 of the SMO framework 116 may also be configured to support functionalities of the SMO framework 116. For example, the non-real time RIC 118 implements logical functionality that enables control of non-real time RAN features and resources, features/applications of the near-real time RIC 128, and/or artificial intelligence/machine learning (AI/ML) procedures. The non-real time RIC 118 may communicate with (or be coupled to) the near-real time RIC 128, such as through the AI interface. The near-real time RIC 128 may implement logical functionality that enables control of near-real time RAN features and resources based on data collection and interactions over an E2 interface, such as the E2 interfaces between the near-real time RIC 128 and the CU 110a and the DU 108b.

The non-real time RIC 118 may receive parameters or other information from external servers to generate AI/ML models for deployment in the near-real time RIC 128. For example, the non-real time RIC 118 receives the parameters or other information from the O-cloud 130 via the O2 link for deployment of the AI/ML models to the real-time RIC 128 via the A1 link. The near-real time RIC 128 may utilize the parameters and/or other information received from the non-real time RIC 118 or the SMO framework 116 via the A1 link to perform near-real time functionalities. The near-real time RIC 128 and the non-real time RIC 115 may be configured to adjust a performance of the RAN. For example, the non-real time RIC 116 monitors patterns and long-term trends to increase the performance of the RAN. The non-real time RIC 116 may also deploy AI/ML models for implementing corrective actions through the SMO framework 116, such as initiating a reconfiguration of the O1 link or indicating management procedures for the A1 link.

Any combination of the RU 106, the DU 108, and the CU 110, or reference thereto individually, may correspond to a base station 104. Hence, the base station 104 may include at least one of the RU 106, the DU 108, or the CU 110. The base stations 104 provide the UEs 102 with access to the core network 120. That is, the base stations 104 might relay communications between the UEs 102 and the core network 120. "The base stations 104 may be associated with macrocells for high-power cellular base stations and/or small cells for low-power cellular base stations. For example, the cell 190e corresponds to a macrocell, whereas the cells 190a-190d may correspond to small cells. Small cells include femtocells, picocells, microcells, etc. A cell structure that includes at least one macrocell and at least one small cell may be referred to as a "heterogeneous network."

Transmissions from a UE 102 to a base station 104/RU 106 are referred to uplink (UL) transmissions, whereas transmissions from the base station 104/RU 106 to the UE 102 are referred to as downlink (DL) transmissions. Uplink transmissions may also be referred to as reverse link transmissions and downlink transmissions may also be referred to as forward link transmissions. For example, the RU 106d utilizes antennas of the base station 104a of cell 190d to transmit a downlink/forward link communication to the UE 102d or receive an uplink/reverse link communication from the UE 102d based on the Uu interface associated with the access link between the UE 102d and the base station 104a/RU 106d.

Communication links between the UEs 102 and the base stations 104/RUs 106 may be based on multiple-input multiple-output (MIMO) antenna technology, including spatial multiplexing, beamforming, and/or transmit diversity. The communication links may be associated with one or more carriers. The UEs 102 and the base stations 104/RUs 106 may utilize a spectrum bandwidth of YMHz (e.g., 5, 10, 15, 20, 100, 400, etc. MHz) per carrier allocated in a carrier aggregation of up to a total of Yx MHz, where x component carriers (CCs) are used for communication in each of the uplink and downlink directions. The carriers may or may not be adjacent to each other along a frequency spectrum. In examples, uplink and downlink carriers may be allocated in an asymmetric manner, more or fewer carriers may be allocated to either the uplink or the downlink. A primary component carrier and one or more secondary component carriers may be included in the component carriers. The primary component carrier may be associated with a primary cell (PCell) and a secondary component carrier may be associated with as a secondary cell (SCell).

Some UEs 102, such as the UEs 102a and 102s, may perform device-to-device (D2D) communications over sidelink. For example, a sidelink communication/D2D link utilizes a spectrum for a wireless wide area network (WWAN) associated with uplink and downlink communications. The sidelink communication/D2D link may also use one or more sidelink channels, such as a physical sidelink broadcast channel (PSBCH), a physical sidelink discovery channel (PSDCH), a physical sidelink shared channel (PSSCH), and/or a physical sidelink control channel (PSCCH), to communicate information between UEs 102a and 102s. Such sidelink/D2D communication may be performed through various wireless communications systems, such as wireless fidelity (Wi-Fi) systems, Bluetooth systems, Long Term Evolution (LTE) systems, New Radio (NR) systems, etc.

The electromagnetic spectrum is often subdivided into different classes, bands, channels, etc., based on different frequencies/wavelengths associated with the electromagnetic spectrum. Fifth-generation (5G) NR is generally associated with two operating bands referred to as frequency range 1 (FR1) and frequency range 2 (FR2). FR1 ranges from 410 MHz - 7.125 GHz and FR2 ranges from 24.25 GHz - 52.6 GHz. Although a portion of FR1 is actually greater than 6 GHz, FR1 is often referred to as the "sub-6 GHz" band. In contrast, FR2 is often referred to as the "millimeter wave" (mmW) band. FR2 is different from, but a near subset of, the "extremely high frequency" (EHF) band, which ranges from 30 GHz - 300 GHz and is sometimes also referred to as a "millimeter wave" band. Frequencies between FR1 and FR2 are often referred to as "mid-band" frequencies. The operating band for the mid-band frequencies may be referred to as frequency range 3 (FR3), which ranges 7.125 GHz - 24.25 GHz. Frequency bands within FR3 may include characteristics of FR1 and/or FR2. Hence, features of FR1 and/or FR2 may be extended into the mid-band frequencies. Higher operating bands have been identified to extend 5G NR communications above 52.6 GHz associated with the upper limit of FR2. Three of these higher operating bands include FR2-2, which ranges from 52.6 GHz - 71 GHz, FR4, which ranges from 71 GHz - 114.25 GHz, and FR5, which ranges from 114.25 GHz - 300 GHz. The upper limit of FR5 corresponds to the upper limit of the EHF band. Thus, unless otherwise specifically stated herein, the term "sub-6 GHz" may refer to frequencies that are less than 6 GHz, within FR1, or may include the mid-band frequencies. Further, unless otherwise specifically stated herein, the term "millimeter wave", or mmW, refers to frequencies that may include the mid-band frequencies, may be within FR2, FR4, FR2-2, and/or FR5, or may be within the EHF band.

The UEs 102 and the base stations 104/RUs 106 may each include a plurality of antennas. The plurality of antennas may correspond to antenna elements, antenna panels, and/or antenna arrays that may facilitate beamforming operations. For example, the RU 106b transmits a downlink beamformed signal based on a first set of beams 132 to the UE 102b in one or more transmit directions of the RU 106b. The UE 102b may receive the downlink beamformed signal based on a second set of beams 134 from the RU 106b in one or more receive directions of the UE 102b. In a further example, the UE 102b may also transmit an uplink beamformed signal to the RU 106b based on the second set of beams 134 in one or more transmit directions of the UE 102b. The RU 106b may receive the uplink beamformed signal from the UE 102b in one or more receive directions of the RU 106b. The UE 102b may perform beam training to determine the best receive and transmit directions for the beam formed signals. The transmit and receive directions for the UEs 102 and the base stations 104/RUs 106 might or might not be the same. In further examples, beamformed signals may be communicated between a first base station 104a and a second base station 104b. For instance, the RU 106a of cell 190a may transmit a beamformed signal based on an RU beam set 136 to the base station 104a of cell 190e in one or more transmit directions of the RU 106a. The base station 104a of the cell 190e may receive the beamformed signal from the RU 106a based on a base station beam set 138 in one or more receive directions of the base station 104a. Similarly, the base station 104a of the cell 190e may transmit a beamformed signal to the RU 106a based on the base station beam set 138 in one or more transmit directions of the base station 104a. The RU 106a may receive the beamformed signal from the base station 104a of the cell 190e based on the RU beam set 136 in one or more receive directions of the RU 106a.

The base station 104 may include and/or be referred to as a next generation evolved Node B (ng-eNB), a generation NB (gNB), an evolved NB (eNB), an access point, a base transceiver station, a radio base station, a radio transceiver, a transceiver function, a basic service set (BSS), an extended service set (ESS), a transmit reception point (TRP), a network node, a network entity, network equipment, or other related terminology. The base station 104 or an entity at the base station 104 can be implemented as an IAB node, a relay node, a sidelink node, an aggregated (monolithic) base station with an RU 106 and a BBU that includes a DU 108 and a CU 110, or as a disaggregated base station 104b including one or more of the RU 106, the DU 108, and/or the CU 110. A set of aggregated or disaggregated base stations 104a-104b may be referred to as a next generation-radio access network (NG-RAN).

The core network 120 may include an Access and Mobility Management Function (AMF) 121, a Session Management Function (SMF) 122, a User Plane Function (UPF) 123, a Unified Data Management (UDM) 124, a Gateway Mobile Location Center (GMLC) 125, and/or a Location Management Function (LMF) 126. The core network 120 may also include one or more location servers, which may include the GMLC 125 and the LMF 126, as well as other functional entities. For example, the one or more location servers include one or more location/positioning servers, which may include the GMLC 125 and the LMF 126 in addition to one or more of a position determination entity (PDE), a serving mobile location center (SMLC), a mobile positioning center (MPC), or the like.

The AMF 121 is the control node that processes the signaling between the UEs 102 and the core network 120. The AMF 121 supports registration management, connection management, mobility management, and other functions. The SMF 122 supports session management and other functions. The UPF 123 supports packet routing, packet forwarding, and other functions. The UDM 124 supports the generation of authentication and key agreement (AKA) credentials, user identification handling, access authorization, and subscription management. The GMLC 125 provides an interface for clients/applications (e.g., emergency services) for accessing UE positioning information. The LMF 126 receives measurements and assistance information from the NG-RAN and the UEs 102 via the AMF 121 to compute the position of the UEs 102. The NG-RAN may utilize one or more positioning methods in order to determine the position of the UEs 102. Positioning the UEs 102 may involve signal measurements, a position estimate, and an optional velocity computation based on the measurements. The signal measurements may be made by the UEs 102 and/or the serving base stations 104/RUs 106.

Communicated signals may also be based on one or more of a satellite positioning system (SPS) 114, such as signals measured for positioning. In an example, the SPS 114 of the cell 190c may be in communication with one or more UEs 102, such as the UE 102c, and one or more base stations 104/RUs 106, such as the RU 106c. The SPS 114 may correspond to one or more of a Global Navigation Satellite System (GNSS), a global position system (GPS), a non-terrestrial network (NTN), or other satellite position/location system. The SPS 114 may be associated with LTE signals, NR signals (e.g., based on round trip time (RTT) and/or multi-RTT), wireless local area network (WLAN) signals, a terrestrial beacon system (TBS), sensor-based information, NR enhanced cell ID (NR E-CID) techniques, downlink angle-of-departure (DL-AoD), downlink time difference of arrival (DL-TDOA), uplink time difference of arrival (UL-TDOA), uplink angle-of-arrival (UL-AoA), and/or other systems, signals, or sensors.

The UEs 102 may be configured as a cellular phone, a smart phone, a session initiation protocol (SIP) phone, a laptop, a personal digital assistant (PDA), a satellite radio, a GPS, a multimedia device, a video device, a digital audio player (e.g., moving picture experts group (MPEG) audio layer-3 (MP3) player), a camera, a game console, a tablet, a smart device, a wearable device, a vehicle, an utility meter, a gas pump, appliances, a healthcare device, a sensor/actuator, a display, or any other device of similar functionality. Some of the UEs 102 may be referred to as Internet of Things (ToT) devices, such as parking meters, gas pumps, appliances, vehicles, healthcare equipment, etc. The UE 102 may also be referred to as a station (STA), a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a mobile client, a client, or other similar terminology. The term UE may also apply to a roadside unit (RSU), which may communicate with other RSU UEs, non-RSU UEs, a base station 104, and/or an entity at a base station 104, such as an RU 106.

Still referring to FIG. 1, in certain aspects, the UE 102 may include a time domain channel property (TDCP) reporting component 140 configured to receive a tracking reference signal (TRS) from a network entity through a channel between the network entity and a UE 102. The TDCP reporting component 140 is further configured to measure, based on the received TRS, a TDCP of the channel between the network entity and the UE 102. A measurement of the TDCP of the channel is associated with at least one of: a configured reporting quantity for a TDCP report, a channel state information (CSI) processing unit duration for the TDCP report, or a minimum processing delay for the TDCP report. The TDCP reporting component 140 is further configured to transmit the TDCP report to the network entity based on the measuring the TDCP of the channel.

In certain aspects, the base station 104 or a network entity of the base station 104 may include a TDCP report processing component 150 configured to transmit a TRS to a UE through a channel between the UE and the network entity. The TDCP report processing component 150 is further configured to receive, from the UE based on the transmitted TRS, a TDCP report indicative of a measurement of the TDCP of the channel between the UE and the network entity. The measurement of the TDCP of the channel is associated with at least one of: a configured reporting quantity for the TDCP report, a CSI processing unit duration for the TDCP report, or a minimum processing delay for the TDCP report. Although the following description may be focused on 5G NR, the concepts described herein may be applicable to other similar areas, such as 5G-Advanced and future versions, LTE, LTE-advanced (LTE-A), and other wireless technologies.

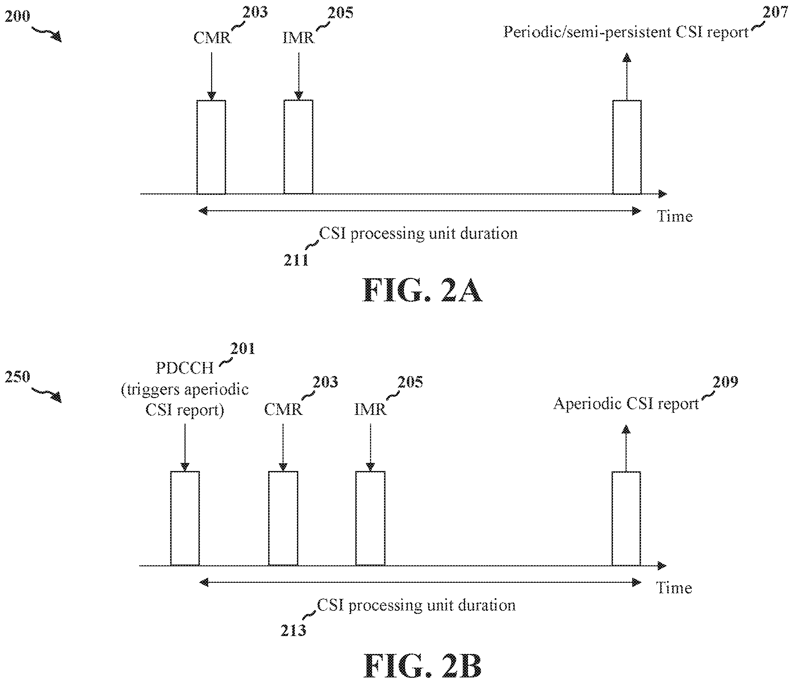

FIG. 2A illustrates a first timing diagram 200 for a first CSI processing unit duration 211 associated with periodic/semi-persistent CSI reporting. FIG. 2B illustrates a second timing diagram 250 for a second CSI processing unit duration 213 associated with aperiodic CSI reporting. A UE 102 that is moving towards or away from a base station 104, or a network entity of a base station 104, may experience a phase shift (e.g., Doppler shift) in a channel path between the UE 102 and the base station 104 based on a Doppler effect associated with the movement of the UE 102. The phase shift/Doppler shift may be based on a speed of the UE 102 relative to the base station 104, a carrier frequency, an angle of arrival (AoA) for the channel path, etc. Although each channel path of a multi-path channel might be associated with a same speed of the UE 102 and a same carrier frequency, different AoAs for different channels paths of the multi-path channel might result in different Doppler shifts for each channel path.

The phase shift for a channel path k is calculated based on:

$$\gamma_k = exp(j2\pi \frac{r_k \times v}{\lambda} t)$$

$$r_k = [sin\theta_k cos\varphi_k \quad sin\theta_k sin\varphi_k \quad cos\theta_k]$$

$$v = v_0 [sin\theta_v cos\varphi_v \quad sin\theta_v sin\varphi_v \quad cos\theta_v]^T$$

where $\lambda$ indicates a waveform length, which is based on the carrier frequency, $t$ indicates a time, $\theta_k$ indicates a zenith angle of arrival (ZAoA) for the channel path k, $\varphi_k$ indicates the azimuth angle of arrival (AAoA) for the channel path $k$, $v_0$ indicates a moving speed of the UE 102, $\theta_v$ indicates a first moving direction (e.g., vertical direction), and $\varphi_v$ indicates a second moving direction (e.g., horizontal direction). The base station 104 may transmit a channel state information-reference signal (CSI-RS) to the UE 102 to perform time and frequency offset tracking for the movement of the UE 102. The time and frequency offset tracking may be associated with Doppler shift estimations and/or Doppler spread estimations. The CSI-RS for the time and frequency offset tracking may be referred to as a TRS.

The TRS might correspond to a CSI-RS resource set indicated in an RRC message parameter, such as *trs-Info.* The base station 104 might configure a periodic TRS based on RRC messaging (e.g., *non-zero power(NZP)-CSI-RS-ResourceSet*) using a higher layer parameter, such as the *trs-Info.* In further examples, the base station 104 may transmit an aperiodic TRS, indicated to the UE via downlink control information (DCI) signaling. The base station 104 may transmit the TRS in 2 symbols of a slot or in 4 symbols allocated to two consecutive slots, where the 2 CSI-RS resources or 4 CSI-RS resources are configured (e.g., in the *NZP-CSI-RS-ResourceSet*) using the higher layer parameter, such as the *trs-Info.* The UE 102 may estimate the Doppler shift and/or the Doppler spread for downlink decoding using the received TRS.

The aperiodic TRS may be quasi-co-located (QCLed) with the periodic TRS, and the base station 104 might provide a QCL indication via DCI. Further, the base station 104 might configure a QCL type and/or a source reference signal for the QCL signaling. QCL types for the source reference signal might be configured based on a higher layer parameter (e.g., the QCL type may correspond to a *qcl-Type* in a *QCL-Info* parameter). A first QCL type, typeA, includes values for a Doppler shift, a Doppler spread, an average delay, and a delay spread. A second QCL type, typeB, includes values for the Doppler shift and/or the Doppler spread. A third QCL type, typeC, includes values for the Doppler shift and/or the average delay. A fourth QCL type, typed, includes values for a spatial receive (Rx) parameter.

Communication links between the UEs 102 and the base stations 104 may be based on multiple-input multiple-output (MIMO) antenna technology. The base station 104 might select a digital precoder for the UE 102 based on a CSI report received from the UE 102. The base station 104 may configure the CSI report using an information element (IE) of an RRC message (e.g., *CSI-reportConfig*), such that the UE 102 may use a channel measurement resource (CMR) 203 for measuring the downlink channel of a CSI-RS transmitted between the base station 104 and the UE 102. Further, the base station 104 may configure an interference measurement resource (IMR) 205 for the UE 102 to measure interference. The UE can subsequently indicate the measured interference on the IMR in the CSI report to the base station 104 (e.g., based on the *CSI-reportConfig* parameter). The CMR 203 and the IMR 205 enable the UE 102 to measure CSI-RSs and subsequently report CSI to the base station 104. The CSI report may include a rank indicator (RI), a precoder matrix indicator (PMI), a channel quality indicator (CQI), and/or a layer indicator (LI). The base station 104 may use the RI and the PMI to select the digital precoder for transmissions to the UE 102. The CQI indicates a signal-to-interference-plus-noise ratio (SINR) for determining a modulation and coding scheme (MCS). The LI is indicative of a strongest layer, which may be used for multi-user (MUI)-MIMO pairing with a low rank transmission and precoder selection for a phase-tracking reference signal (PT-RS).

The base station 104 might configure a time-domain CSI reporting technique to the UE 102. For example, the base station 104 might configure the UE 102 for a periodic/semi-persistent CSI report 207 or an aperiodic CSI report 209 (e.g., using the *CSI-reportConfig* parameter). The base station 104 activates or deactivates the periodic/semi-persistent CSI report 207 using a medium access control-control element (MAC-CE) indication to the UE 102. In further examples, the base station 104 might trigger the aperiodic CSI report 209 by transmitting a physical downlink control channel (PDCCH) 201 instruction to the UE 102. The UE 102 may report periodic CSI on a physical uplink control channel (PUCCH) resource (e.g., configured based on the *CSI-reportConfig* parameter). The UE 102 may report semi-persistent CSI on the PUCCH resource or on a physical uplink shared channel (PUSCH) resource configured based on the DCI received from the base station 104. The UE 102 may also report aperiodic CSI on the PUSCH resource configured based on the DCI received from the base station 104.

The UE 102 can be configured with multiple *CSI-reportConfig* IEs for multiple CSI measurements and reports. Thus, a plurality of CSI processing units may be used for parallel processing of received CSI-RS to create a plurality of CSI measurements and reports. The UE 102 might transmit UE capability information to the base station 104 indicating a number of CSI processing units that the UE 102 supports. If the base station 104 requests CSI reports that require more parallel CSI processing at the UE 102 than the number of CSI processing units available at the UE (i.e., indicated in the UE capability information), the UE 102 can report non-current information for low priority CSI reports. In some examples, the UE 102 may determine a priority of a particular CSI report based on predefined protocols. For example, a CSI processing unit occupancy rule for the periodic/semi-persistent CSI report 207 and the aperiodic CSI report 209 may be based on the predefined protocols.

The first CSI processing unit duration 211 for the periodic/semi-persistent CSI report 207 corresponds to a CSI processing unit that's occupancy begins at a first symbol of earliest resources for the CMR 203 or the IMR 205 used for measurements by the UE 102. For example, the UE 102 may perform one or more measurements of a CSI-RS, CSI-interference measurement (CSI-IM), a synchronization signal block (SSB), etc. The first CSI processing unit duration 211 for the periodic/semi-persistent CSI report 207 continues through last resources for the CMR 203 and the IMR 205 used for the measurement of the UE 102 and ends at a last symbol of a PUSCH-/PUCCH used by the UE 102 for transmitting the periodic/semi-persistent CSI report 207 to the base station 104.

The second CSI processing unit duration 213 for the aperiodic CSI report 209 corresponds to a CSI processing unit that's occupancy begins at a first symbol after receiving the PDCCH 201 that triggers the aperiodic CSI report 209. The second CSI processing unit duration 213 for the aperiodic CSI report 209 continues through last resources for the CMR 203 and the IMR 205 used for the measurement of the UE 102 and ends at a last symbol of a PUSCH used by the UE 102 for transmitting the aperiodic CSI report 209 to the base station 104. If the PDCCH 201 that triggers the aperiodic CSI report 209 corresponds to two PDCCH candidates from two respective search space sets, the PDCCH candidate that ends later in time is used for determining the second CSI processing unit duration 213 for the aperiodic CSI report 209.

If the PDCCH 201 triggers an initial semi-persistent CSI report on the PUSCH, the CSI processing unit duration for the initial semi-persistent CSI report should not be the same as the first CSI processing unit duration 211 for the periodic/semi-persistent CSI report 207. Instead, the CSI processing unit duration for the initial semi-persistent CSI report may correspond to the second CSI processing unit duration 213 for the aperiodic CSI report 209. That is, the CSI processing unit duration for the initial semi-persistent CSI report transmitted on the PUSCH, after the PDCCH 201, begins at the first symbol after the PDCCH 201 and ends at the last symbol of the PUSCH that carries the initial semi-persistent CSI report. If the PDCCH 201 that triggers the initial semi-persistent CSI report corresponds to two PDCCH candidates from two respective search space sets, the PDCCH candidate that ends later in time is used for determining the CSI processing unit duration for the initial semi-persistent CSI report.

CSI reporting by the UE 102 might be based on a minimum processing delay time. For example, scheduling for the periodic/semi-persistent CSI report 207 or the aperiodic CSI report 209 might include minimum processing delays of Z and Z'. Values of Z and Z' for different types of CSI reports might be based on one or more predefined protocols. If a scheduling offset does not indicate the minimum processing delays of Z and Z', the UE 102 can report the minimum processing delay associated with the non-current CSI or disregard a triggering DCI, if no other signals (e.g. data or hybrid automatic repeat request (HARQ)-acknowledgment (ACK) (HARQ-ACK)) are to be transmitted on the PUSCH triggered by the DCI (e.g., PDCCH 201). If a *CSI request* field of the DCI is used to trigger one or more CSI reports from the UE 102 on the PUSCH, the UE 102 may transmit the one or more CSI reports to the base station 104, if the first uplink symbol associated with the one or more CSI reports serves as a timing advance that starts no earlier than symbol $Z_{ref}$. For instance, the UE 102 may transmit an $n$-th triggered CSI report to the base station 104, if the first uplink symbol associated with the $n$-th CSI report starts no earlier than symbol $Z'_{ref}(n)$.

Some CSI feedback techniques might not include UE reporting of one or more TDCPs to the base station 104. Instead, the UE 102 may internally utilize the one or more TDCPs, such as Doppler shift and/or Doppler spread measured from the TRS, for CSI reporting procedures, but does not report the one or more TDCPs to the base station 104. A lack of information regarding TDCPs measured at the UE 102 may cause the base station 104 to rely on the CSI measured and reported to the base station 104 for performing further scheduling. If the UE 102 is moving at an increased rate of speed relative to the base station 104, an increased Doppler shift may occur, which might cause the CSI report received from the UE 102 to be inaccurate. Hence, the base station 104 might not be able to select a suitable precoder for the downlink transmission, which may reduce transmission efficiencies.

Accordingly, UE 102 transmission of a TDCP report to the base station 104 assists the base station 104 with the scheduling of the downlink transmissions for the UE 102. The base station 104 may determine based on the TDCP report whether the channel is experiencing significant change, so that the base station 104 may further determine whether to request additional CSI feedback or a sounding reference signal (SRS) for antenna beam control. If the TDCP report indicates a substantial change in channel conditions, the base station 104 may trigger the SRS for antenna switching to measure the downlink precoder based on uplink and downlink channel reciprocity. However, SRS techniques might increase system overhead based on the resources for the SRS being dedicated resources for the UE 102. If the TDCP report does not indicate a significant channel change, the base station 104 may trigger the CSI report based on the PDCCH 201. However, PDCCH triggering techniques may be associated with increased latency as shown by comparing FIG. 2B with FIG. 2A.

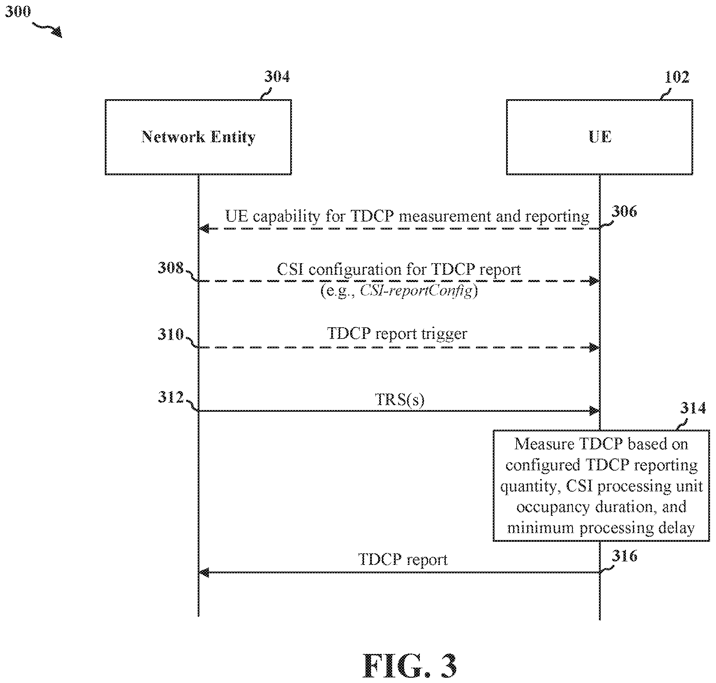

The base station 104 may generate a channel prediction or a channel Eigen vector prediction based on the reported TDCP received from the UE 102, such that the base station 104 may further generate a second prediction for the precoder based on a past precoder matrix and the reported TDCP. The base station 104 transmits a triggering indication to the UE 102 to cause the UE 102 to transmit the TDCP report to the base station 104. The UE 102 may determine the CSI processing unit occupancy rule as well as the minimum processing delay for the TDCP report after reception of the triggering indication. If the base station 104 configures a plurality of TRSs for TDCP measurements at the UE 102, the UE 102 may select/determine the TDCPs to include in the TDCP report. FIGs. 2A-2B illustrate CSI reporting that does not include TDCP information. As will be discussed with respect to FIG. 3, the UE 102 may transmit a TDCP report including TDCP information to the network, so that the network can make scheduling determinations for channels associated with changing channel conditions.

FIG. 3 is a signaling diagram 300 illustrating communications between a UE 102 and a network entity 304 for a TDCP measurement and reporting procedure. The network entity 304 may correspond to the base station 104 or an entity at the base station 104, such as the RU 106, the DU 108, the CU 110, etc. The UE 102 may report 306 a UE capability to the network entity 304 for TDCP measurement and reporting. For example, the UE capability might correspond to a first UE capability for TDCP measurement and a second UE capability for TDCP reporting. The UE 102 might transmit 306 in UE capability information an indication of a first maximum number of TRSs that may be received 312 per *CSI-reportConfig* for the TDCP report, a second maximum number of TRSs that may be received 312 across the *CSI-reportConfig* for the TDCP report, and/or a third maximum number of CSI-*reportConfig* that may be received 312 for the TDCP report. The maximum numbers may be counted per component carrier (CC), per frequency band, per band combination, and/or per UE. The UE 102 may also transmit 306 an indication of parameters that are supported by the UE 102 for the TDCP measurement (e.g., a number of CSI-RS resources per TRS, a minimum bandwidth for the TRS, etc.).

The network entity 304 transmits 308 a CSI configuration to the UE 102 for the TDCP report based on the UE capability information received 306 from the UE 102. For example, the CSI configuration transmitted 308 to the UE 102 can include a CMR configuration for the TDCP measurement. The network entity 304 might configure N TRS(s) based on RRC parameters (not shown; occurs after or in association with 308). In examples, the RRC parameters may also be associated with an RRC reconfiguration message from the network entity 304 to the UE 102, or a system information block (SIB). The SIB may correspond to an existing type of SIB (e.g., SIB1) or a different type of SIB (e.g., SIB *J*, where *J* is an integer above 21) transmitted by the network entity 304. In further examples, the N TRS(s) may be configured for the TDCP measurement in the *CSI-reportConfig.* Thus, N *NZP-CSI-RS-ResourceSet* can be configured for *resourcesForChannelMeasurement.*

In certain examples, the network entity 304 configures N TRSs for the TDCP measurement based on the RRC message, but instructs the UE via MAC-CE or DCI to select M TRSs for performing the TDCP measurement, where $0 < M \leq N$. The network entity 304 may configure the N TRSs for the TDCP measurement based on the *CSI-reportConfig*. Thus, N *NZP-CSI-RS-ResourceSet* can be configured for *resourcesForChannelMeasurement,* such that the network entity 304 may use the MAC-CE to indicate the M TRSs to be measured 314 at the UE 102.

The MAC-CE may indicate a serving cell index, which may correspond to a serving cell index for the *CSI-reportConfig* for the TDCP measurement. In further examples, the MAC-CE may indicate a bandwidth part (BWP) index, which may correspond to a BWP index for the *CSI-reportConfig* for the TDCP measurement. In still further examples, the MAC-CE may indicate a *CSI-reportConfigId,* which may correspond to an identifier (ID) for a corresponding *CSI-reportConfig* for the TDCP measurement. In still further examples, the MAC-CE may indicate a bitmap for the TRS to be measured 314 at the UE 102, which may correspond to an activation/deactivation status of the TDCP measurement for each TRS configured via the *CSI-reportConfig* for the TDCP measurement. When using a triggering DCI, the network entity 304 transmits 310 a trigger to the UE 102 for the TDCP report. The network entity 304 may indicate different values in a *CSI request* field to indicate different TRSs that will be transmitted 312 to the UE 102 for the TDCP measurement. For instance, the network entity 304 may configure the different TRSs for the TDCP measurement for different *CSI-AssociatedReportConfigInfo.*

The network entity 304 determines the TRS transmitted 312 to the UE 102 for the TDCP measurement based on a transmission configuration indicator (TCI) state for the PDCCH/PDSCH associated with the TRS. The network entity 304 may indicate, in the TCI state, the TRS for QCL indication. The UE 102 measures 314 the TDCP based on reception 312 of the TRS from the network entity 304. For example, the TRS transmitted 312 to the UE 102 might reflect channel distortions and multi-path between the UE 102 and the network entity 304, such that the UE 102 may determine various channel properties based on the distortions. The UE 102 may use the TRS for QCL types other than typeD (associated with the spatial Rx parameter) to measure 314 the TDCP and transmit 316 the TDCP report.

The UE 102 might use the TRS for QCL typeD indication to perform the TDCP measurement and reporting when the TCI state for the PDCCH/PDSCH is dynamically changing. If multiple TCI states are indicated for the PDCCH/PDSCH, UE 102 may use the TRS in one of the TCI states for the TDCP measurement, such as the TRS in the TCI state with a lowest TCI state ID value. In other examples, the UE 102 may use all the TRSs in the TCI states for the TDCP measurement. If the UE 102 measures more than 1 TRS for generating the TDCP report, the UE 102 may measure 314 more than 1 TDCP.

If the number of TRS that the UE 102 receives 312 for the TDCP measurement (e.g., determined based on the TCI state for the PDCCH/PDSCH) is larger than a reported number of TRSs transmitted 306 in the UE capability information, the UE 102 may select one or more TRSs for the TDCP measurement and reporting based on a periodicity of the TRSs, a TCI state ID value, a control resource set (CORESET) ID, or a search space ID.

The TRS transmitted 312 to the UE 102 for the TDCP measurement may correspond to a configuration for a first TRS associated with 2 CSI-RS resources and/or a second TRS associated with 4 CSI-RS resources. The network entity 304 may configure TRS(s) associated with 2 CSI-RS resources as CMR(s) for TDCP reporting based on periodic TRSs and TRS(s) associated with 4 CSI-RS resources as CMR(s) for TDCP reporting based on aperiodic TRSs. The network entity 304 may refrain from transmitting an IMR configuration for the TDCP measurement. For example, the network entity 304 may refrain from configuring the UE 102 based on *csi-IM-ResourcesForInterference* or *nzp-CSI-RS-ResourcesForInterference* in the *CSI-reportConfig* transmitted 308 to the UE 102.

The network entity 304 may configure TDCP reporting quantities for the TDCP report via RRC parameters (e.g., based on *reportQuantity*). A multi-path channel between the network entity 304 and the UE 102 may correspond to:

$$h(t) = \sum_{k=1}^{K} \alpha_k e^{j2\pi f_k t}$$

where $\alpha_k$ corresponds to non-time related parameters, $f_k$ corresponds to the Doppler shift, and $K$ corresponds to a maximum number of paths for the multi-path channel. The multi-path channel can be indicated based on:

$$h(t) = e^{j2\pi (f_{min})t} \sum_{k=1}^{K} \alpha_k e^{j2\pi (f_k - f_{min})t}$$

$$f_{min} = min\{f_1, f_2, ... f_k\}$$

For CSI reporting, $(f_k - f_{min})$ might correspond to a change in the CSI as a result of the Doppler effect.

The network entity 304 might configure the UE 102 via the RRC message information element (e.g. *reportQuantity*) to report the Doppler shift for a strongest path of the multi-path channel based on a channel impulse response (CIR) estimated using the TRS transmitted 312 to the UE 102. In further examples, the network entity might configure the UE 102 via the RRC message parameter (e.g. *reportQuantity*) to report a maximum Doppler shift of X strongest paths of the multi-path channel based on the CIR estimated using the TRS transmitted 312 to the UE 102, where a value of X may be predefined, configured based on the RRC message, or indicated via MAC-CE or DCI. Alternatively, the UE 102 may determine the value of X based on a received power associated with individual paths of the multi-path channels as well as a threshold power difference from the strongest path. A path that includes a received power above the received power of the strongest path less the threshold power difference may be included in the X strongest paths. The power may be quantified in units of decibel milliwatts (dBm) and threshold may be quantified in the unit of decibel (dB). The threshold may be predefined (e.g., 3dB) or configured based on RRC messaging via the *CSI-reportConfig.*

In further examples, the network entity 304 may configure the UE 102 via the RRC messaging (e.g. *reportQuantity*) to report the Doppler spread of the X strongest paths based on the CIR estimated using the TRS transmitted 312 to the UE 102. The delay spread may correspond to a maximum Doppler shift less a minimum Doppler shift of the X strongest paths. In further examples, the network entity 304 may configure the UE 102 via the RRC messaging (e.g. *reportQuantity*) to report a relative Doppler shift for the strongest path based on the CIR estimated using the TRS transmitted 312 to the UE 102. The relative Doppler shift may correspond to the Doppler shift less the minimum Doppler shift for all the paths of the multi-path channel. In further examples, the network entity 304 may configure the UE 102 via the RRC messaging (e.g. *reportQuantity)* to report a maximum relative Doppler shift for the X strongest paths based on the CIR estimated using the TRS transmitted 312 to the UE 102. The maximum relative Doppler shift may correspond to the Doppler shift less the minimum Doppler shift for all the paths of the multi-path channel or for the X strongest paths of the multi-path channel.

The network entity 304 may configure the UE 102 to report both the Doppler shift and the Doppler spread. The network entity 304 may also configure the UE 102 via the RRC messaging (e.g. *reportQuantity*) to report the Doppler shifts or the relative Doppler shifts for the X strongest paths based on the CIR estimated using the TRS transmitted 312 to the UE 102. The network entity 304 may also configure the UE 102 via the RRC messaging (e.g. *reportQuantity)* to report a layer 1 (L1)-reference signal receiving power (RSRP) (L1-RSRP) or an L1-SINR that the UE 102 measures 314 based on the TRS transmitted 312 to the UE 102 in addition to the Doppler shift and/or the Doppler spread.

The network entity 304 and the UE 102 might determine that M CSI processing units are occupied when the UE 102 is configured (e.g., based on the CSI-*reportConfig*) to measure 314 M TDCPs associated with M TRSs transmitted 312 to the UE 102. A duration of the CSI processing units might be different for different TRSs received 312 from the network entity 304. For example, the CSI processing unit duration for periodic/semi-persistent TDCP reports may begin at a first symbol of the TRS and end at a first symbol of the PUCCH/PUSCH that includes the TRS report or a next symbol after a last symbol of the PUCCH/PUSCH that includes the TRS report. The CSI processing unit duration for aperiodic TDCP reports may begin at a first symbol of the DCI that triggers 310 the TDCP report or a next symbol after a last symbol of the DCI that triggers 310 the TDCP report and end at a first symbol of the PUCCH/PUSCH that includes the TRS report or a next symbol after a last symbol of the PUCCH/PUSCH that includes the TRS report.

In some examples, the CSI processing units may include a common duration for all M TRSs. The CSI processing unit duration for periodic/semi-persistent TDCP reports may begin at a first symbol for each of the M TRSs and end at a next symbol after a last symbol of the PUCCH/PUSCH that includes the TRS report. The CSI processing unit duration for aperiodic TDCP reports may begin at a first symbol of the DCI that triggers 310 the TDCP report or a next symbol after a last symbol of the DCI that triggers 310 the TDCP report and end at a first symbol of the PUCCH/PUSCH that includes the TDCP report or a next symbol after a last symbol of the PUCCH/-PUSCH that includes the TDCP report. In further examples, the network entity 304 and the UE 102 might determine that 1 CSI processing unit is occupied when the UE 102 is configured (e.g., based on the *CSI-reportConfig*) *to* measure 314 the M TDCPs associated with the M TRSs transmitted 312 to the UE 102. For both a periodic/semi-persistent TDCP report and an aperiodic TDCP report, the beginning and ending symbols of the 1 CSI processing unit duration may correspond to the same symbols as used for the CSI processing unit durations associated with the M TRSs.

The network entity 304 and the UE 102 might determine that X CSI processing units are occupied when the UE 102 is configured (e.g., based on the *CSI-reportConfig*) to measure 314 the M TDCPs associated with the M TRSs transmitted 3 1 2 to the UE 102, where the value of X corresponds to the number of strongest paths in the multi-path channel. The UE 102 may determine the value of X based on a number of overlapped TRSs in time domain. Two TRSs may be overlapped in time domain if the TRSs are transmitted 312 at overlapped symbols or overlapped slots. Alternatively, two TRSs may be overlapped in time domain if the TRSs have overlapped time domain durations. A time duration for a TRS may begin at a first symbol of the TRS and end at Y symbols after a last symbol of the TRS, where the UE measures the TDCP within the Y symbols and Y is an integer above 0, which may be predefined or reported by the UE.

The network entity 304 may also determine the value of X and the value of M based on the UE capability information received 306 from the UE 102. The UE 102 may indicate, in the UE capability information, a UE capability for a maximum number of TRSs per CSI processing unit, which may be denoted by T, such that the network entity 304 may determine the value of X based on $X = \text{ceil}(M / T)$, where "ceil" refers to a function for rounding up to a next largest integer.

If the network entity 304 triggers 310 multiple *CSI-reportConfig* associated with more CSI processing units than the maximum number of CSI processing units indicated in the UE capability information, the UE 102 may report non-current CSI or non-current TDCPs for CSI reports with low priority. The priority of the TDCP report transmitted 316 to the network entity 304 may be different than a priority of other types of CSI reports. The network entity 304 and the UE 102 may determine the priority for a CSI report, such as the TDCP report, based on time domain characteristics of the CSI report, such as whether the CSI report is periodic, semi-persistent, or aperiodic. The priority of the CSI report may also be based on the *CSI-reportConfigId,* the serving cell ID, and/or a reporting quantity (e.g., Doppler shift, Doppler spread, etc.).

In examples, the priority of the TDCP report transmitted 316 to the network entity 304 can be calculated based on $\text{Pri}_{iCSI}(y, k, c, s) = 2 \cdot N_{cells} \cdot M_s \cdot y + N_{cells} \cdot M_s \cdot k + M_s \cdot c + s$, where an actual priority of the TDCP report is higher if the priority value is lower (e.g., priority 0 corresponds to a higher priority than priority 1). A value of k=0 may indicate CSI reports that include L1-RSRP or L1-SINR information, a value of k=1 may indicate CSI reports that do not include L1-RSRP, L1-SINR, or TDCP information, a value of k=2 may indicate CSI reports that include TDCP information. Further, $y = 0$ indicates aperiodic CSI reports transmitted on PUSCH, $y = 1$ indicates semi-persistent CSI reports transmitted on the PUSCH, $y = 2$ indicates semi-persistent CSI reports transmitted on PUCCH, and $y = 3$ indicates periodic CSI reports transmitted on PUCCH. $c$ corresponds to the serving cell index and $N_{cells}$ corresponds to a value of the higher layer parameter *maxNrofServingCells*. $s$ corresponds to the *reportConfigID* and $M_s$ corresponds to a value of the higher layer parameter *maxNrofCSI-ReportConfigurations*.

In an alternative example, k=0 may indicate CSI reports that include TDCP information, k=1 may indicate CSI reports that include L1-RSRP or L1-SINR information, and k=2 may indicate CSI reports that do not include L1-RSRP, L1-SINR, or TDCP information. In yet another alternative example, k=0 may indicate CSI reports that include L1-RSRP or L1-SINR information, k=1 may indicate CSI reports that include TDCP information, and k=2 may indicate CSI reports that do not include L1-RSRP, L1-SINR, or TDCP information. In still another alternative example, k=0 may indicate CSI reports that include L1-RSRP, L1-SINR, or TDCP information and k=1 may indicate CSI reports that do not include L1-RSRP, L1-SINR, or TDCP information.

The minimum processing delay for the TDCP report may be predefined for the UE 102. For example, the minimum processing delay for the TDCP report can be the same delay as used for an L1-RSRP report (e.g., Z3, Z3'). Alternatively, the minimum processing delay for the TDCP report may be the same delay as used for a CSI report based on a Type1 codebook (e.g., Z1, Z1'). The values of Z1 and Z3 may be based on predefined tables, where Z1 and Z1' indicate a first delay used for a low complexity CSI report and Z3 and Z3' indicate a second delay used for an L1-RSRP report. In further examples, the minimum processing delay may be based on the minimum processing delay for the L1-RSRP report as well as the number of configured M TRSs and the number of CSI processing units for the *CSI-reportConfig* for a TDCP measurement C. The minimum processing delay may be calculated based on ceil(M/C)*Z3, ceil(M/C)*Z3'. In still further examples, the minimal processing delay for the TDCP report corresponds to the minimum processing delay for a CSI report based on a Type1 codebook as well as the number of configured M TRSs and the number of CSI processing units for the *CSI-reportConfig* for the TDCP measurement C. Thus, the minimum processing delay may be calculated based on ceil(M/C)*Z1, ceil(M/C)*Z1'.

The UE 102 may report a UE capability for the minimum processing delay for the TDCP report (Z, Z') in the UE capability information transmitted 306 to the network entity 304. The minimum processing delay for a *CSI-reportConfig* with M TRSs for a TDCP measurement corresponds to (M*Z, M*Z'). In another example, the minimum processing delay for a *CSI-reportConfig* with M TRSs and C CSI processing units for the TDCP measurement C corresponds to cell(M/C)*Z, ceil(M/C)*Z'. In a further example associated with a maximum number of configured TRSs, the minimum processing delay for a *CSI-reportConfig* with M TRSs for the TDCP measurement corresponds to (Z, Z').

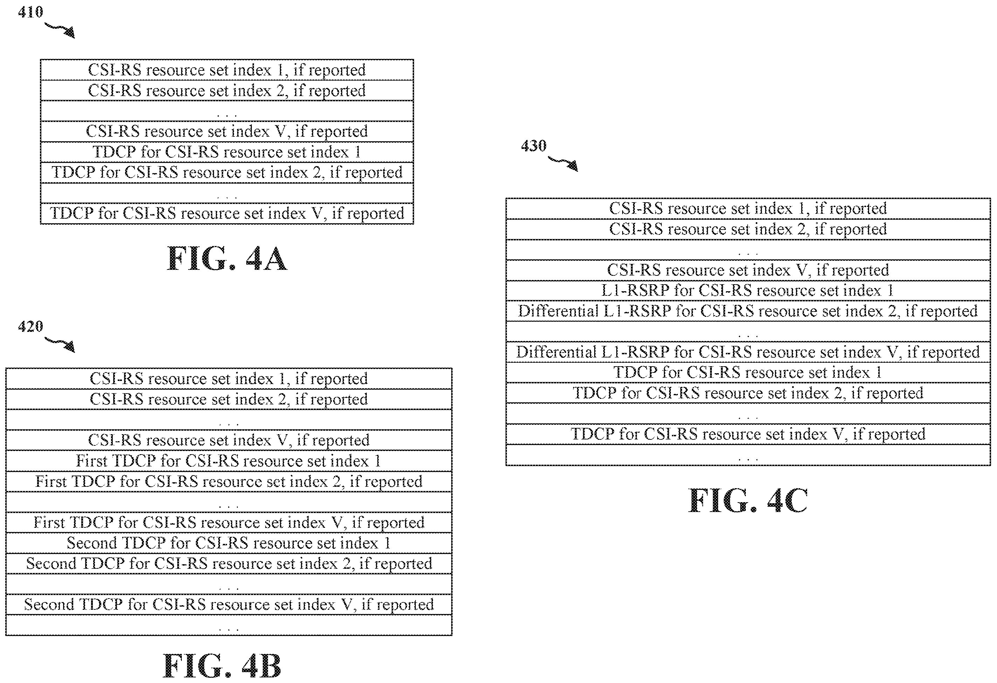

The UE 102 might measure 314 the TDCP based on a wideband operation. For example, the UE 102 might measure 314 the TDCP based on an entire bandwidth for a corresponding TRS. The TDCP, such as the Doppler shift and/or the Doppler spread, may be quantized as a phase shift associated with a certain time duration. In examples, the UE 102 may report multiple bits to indicate the Doppler shift and/or the Doppler spread. Quantization of the multiple bits defines what the multiple bits indicate. For instance, the Doppler shift and/or the Doppler spread might be quantized based on a phase shift with a range of (0, 360) degrees. Hence, 2 bits might be used to quantize the phase shift, where a step size could be 90 degrees, based on '00': 0-90 degrees, '01': 90-180 degrees; '10': 180-270 degrees; '11': 270-360 degrees. The time duration may be predefined or configured based on the RRC messaging from the network entity 304. A predefined time duration might correspond to a time duration for a slot based on a subcarrier spacing (SCS) for an active uplink/downlink BWP or a subframe. The UE 102 may also determine the time duration based on a symbol interval between two symbols for the TRS received 312 for the TDCP measurement. Alternatively, the TDCP may be quantized based on an absolute value of the Doppler shift and/or the Doppler spread, which may be indicated in hertz (Hz) or kilohertz (kHz). The Doppler shift may be calculated based on $e^{j2\pi fkt}$ and the Doppler spread may be calculated based on $e^{j2\pi(fk-fmin)t}$. The TDCP may be quantized based on a coefficient for the Doppler shift and the Doppler spread calculations as $2\pi f_k$ and $2\pi(f_k - f_{min})$, respectively, or as $f_k$ and $(f_k - f_{min})$, respectively. FIGs. 4A-4C illustrates example TDCP reports that may be generated based on the TDCP measurement and reporting procedure illustrated in FIG. 3.

FIGs. 4A-4C illustrates tables 410-430 including example TDCP report information transmitted 316 from the UE 102 to the network entity 304. If the UE 102 is configured to transmit 316 the TDCP report (e.g., including the Doppler shift and/or Doppler spread) based on M TRSs for the TDCP measurement, the UE 102 may report V TDCPs in the TDCP report transmitted 316 to the network entity 304, where 0<V≤M. If V is smaller than M, the UE 102 may report V CSI-RS resource set indexes in the TDCP report transmitted 316 to the network entity 304 as well as V quantized TDCPs. A CSI-RS resource set index indicates the resource set from a lowest *NZP-CSI-RS-ResourceSetId* to a highest *NZP-CSI-RS-ResourceSetId* of the resource set configured for the TDCP measurement. The TDCP report may be transmitted 316 to the network entity 304 based on an absolute reporting technique associated with a largest or smallest TDCP value, or the TDCP report may be transmitted 316 to the network entity 304 based on a differential reporting technique with a first TDCP being used as a reference point.

A first table 410 includes example information for a TDCP report that indicates at least one TDCP reporting quantity (e.g., Doppler shift, Doppler spread, etc.) for a TRS. In particular, the first table 410 indicates CSI-RS resource set indexes 1-V when the CSI-RS resource set indexes are reported in the TDCP report transmitted 316 to the network entity 304. The first table 410 also indicates TDCPs for the CSI-RS resource set indexes 1-V when the CSI-RS resource set indexes are reported in the TDCP report transmitted 316 to the network entity 304. Because the TDCP report associated with the first table 410 corresponds to at least one TDCP reporting quantity, at least the TDCP for the CSI-RS resource set index 1 is reported in the TDCP report transmitted 316 to the network entity 304.

A second table 420 includes example information for a TDCP report that indicates more than one TDCP reporting quantity (e.g., Doppler shift and Doppler spread) for a single TRS. In particular, the second table 420 indicates CSI-RS resource set indexes 1-V when the CSI-RS resource set indexes are reported in the TDCP report transmitted 316 to the network entity 304. The second table 420 also indicates first TDCPs (e.g., Doppler shift) and second TDCPs (e.g., Doppler spread) for the CSI-RS resource set indexes 1-V when the CSI-RS resource set indexes are reported in the TDCP report transmitted 316 to the network entity 304. Because the TDCP report associated with the second table 420 corresponds to more than one TDCP reporting quantity, at least the first TDCP and the second TDCP for the CSI-RS resource set index 1 is recorded in the TDCP report transmitted 316 to the network entity 304.

A third table 430 includes example information for a TDCP report that indicates a joint TDCP and beam report (e.g., L1-RSRP). In particular, the third table 430 indicates CSI-RS resource set indexes 1-V when the CSI-RS resource set indexes are reported in the TDCP report transmitted 316 to the network entity 304. The third table 430 also indicates TDCPs and L1-RSRP information for the CSI-RS resource set indexes 1-V when the CSI-RS resource set indexes are reported in the TDCP report transmitted 316 to the network entity 304. The L1-RSRPs for the CSI-RS resource set indexes 2-V may correspond to differential L1-RSRP values with respect to the L1-RSRP value for the CSI-RS resource set index 1. Because the TDCP report associated with the third table 430 corresponds to joint TDCP and beam reporting (e.g., L1-RSRP), at least the TDCP and the L1-RSRP for the CSI-RS resource set index 1 is reported in the TDCP report transmitted 316 to the network entity 304. Some TDCP reports may also indicate L1-SINR information.

In cases where the value of V is the same as the value of M, the UE 102 might not transmit the CSI-RS resource set index to the network entity 304. The value of V may be configured to the UE 102 based on the RRC messaging from the network entity 304, such as by an RRC parameter in the *CSI-reportConfig.* The UE 102 may determine the value of V based on a number of TCI states associated with the PDCCH/PDSCH. The UE 102 may indicate the value of V in the TDCP report after selecting the TRSs for which to report the beam quality (e.g., L1-RSRP/L1-SINR). The UE 102 measures 314 the selected TRSs and transmits 316 the TDCP report for the TRSs associated with an L1-RSRP/L1-SINR that is higher than a threshold. The threshold may be predefined or configured based on the RRC messaging from the network entity 304. In further examples, the UE 102 may determine the threshold as the L1-RSRP for a strongest TRS minus an offset, where the offset may be predefined or configured based on the RRC messaging from the network entity 304.

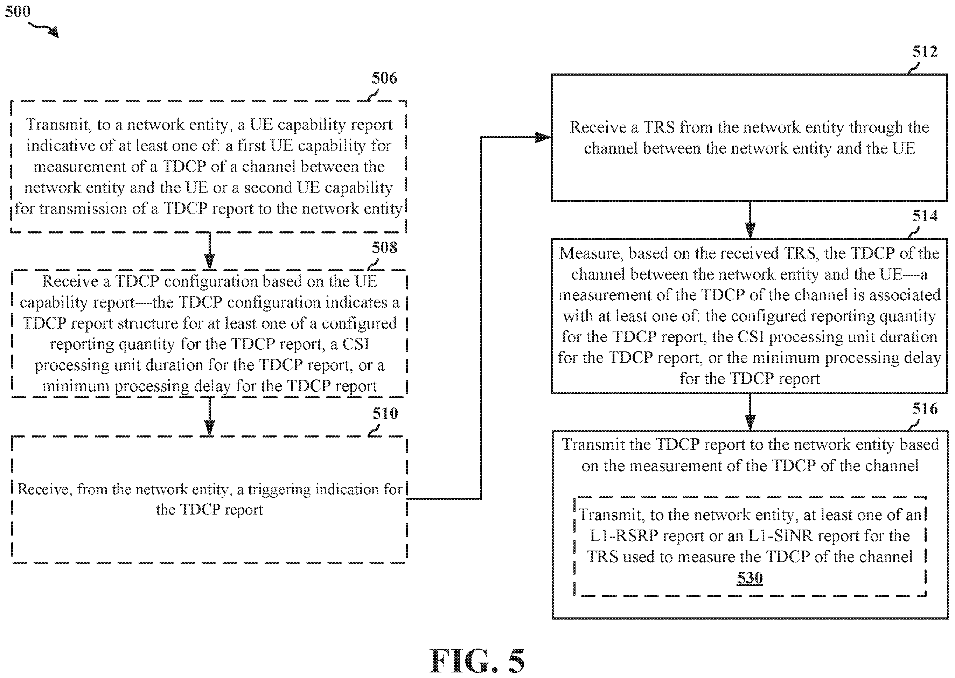

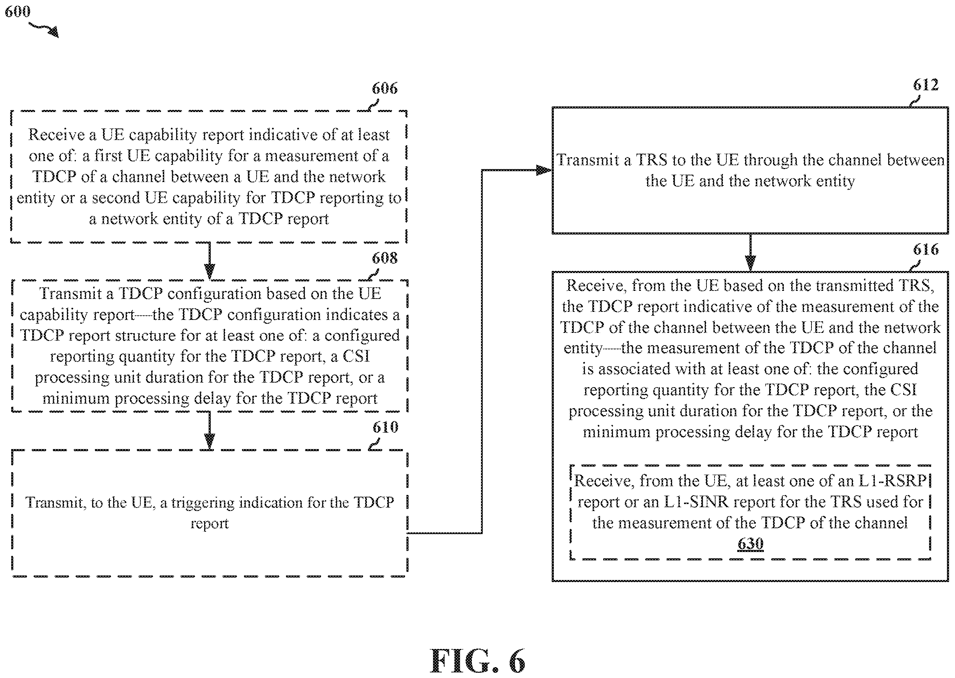

When UE 102 transmits 316 the TDCP report on PUCCH/PUSCH, the value of V may be reported in CSI part 1, and the other information, such as information included in the tables 410-430, may be reported in CSI part 2. If the TDCP report is transmitted 316 with another CSI report, the TDCP may be reported in CSI part 1 or CSI part 2 in different implementations. The CSI part 1 may include a fixed payload size and may be used to identify a number of information bits in the CSI part 2. An entirety of the CSI part 1 is transmitted to the network entity 304 before the CSI part 2 is transmitted to the network entity 304. FIGs. 3-4 illustrate TDCP measurement and reporting procedures as well as example TDCP reports. FIGs. 5-6 show methods for implementing one or more aspects of the TDCP measurement and reporting procedures. In particular, FIG. 5 shows an implementation by the UE 102 of the one or more aspects of FIGs. 3-4. FIG. 6 shows an implementation by the network entity 304 of the one or more aspects of FIGs. 3-4.

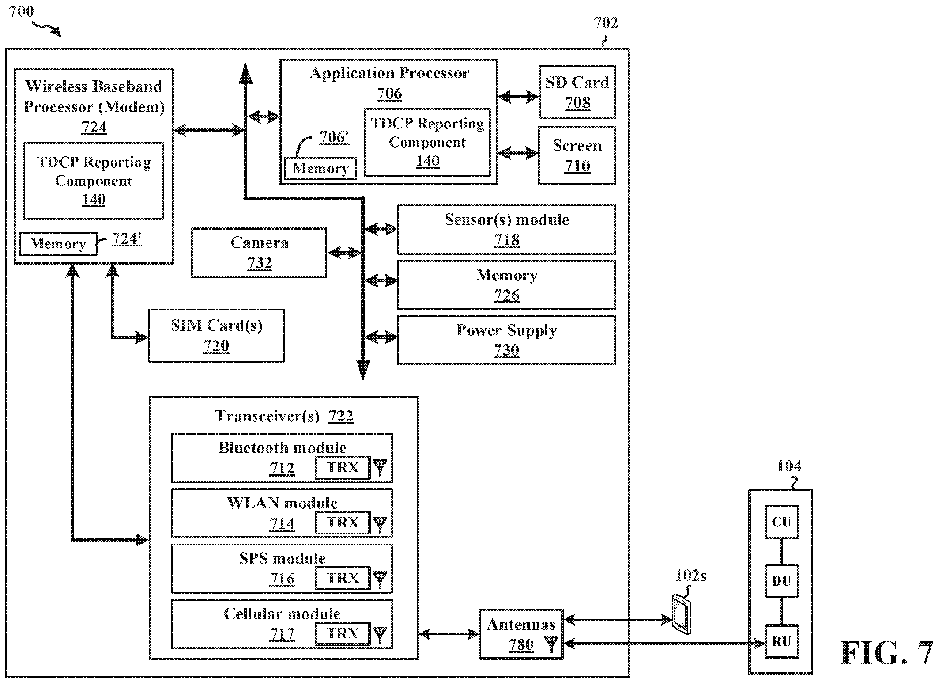

FIG. 5 illustrates a flowchart 500 of a method of wireless communication at a UE. With reference to FIGs. 1 and 7, the method may be performed by the UE 102, the UE apparatus 702, etc., which may include the memory 724' and which may correspond to the entire UE 102 or the UE apparatus 702, or a component of the UE 102 or the UE apparatus 702, such as the wireless baseband processor 724, and/or the application processor 706.

The UE 102 transmits 506, to a network entity, UE capability information indicative of at least one of: a first UE capability for measurement of a TDCP of a channel between the network entity and the UE or a second UE capability for transmission of a TDCP report to the network entity. For example, referring to FIG. 3, the UE 102 transmits 306, to the network entity 304, the UE capability for TDCP measurement and reporting. The TDCP reporting component 140 of the UE 102 or the UE apparatus 702 may perform the transmission 506.

The UE 102 receives 508 a TDCP configuration based on the UE capability information-the TDCP configuration indicates a TDCP report structure for at least one of a configured reporting quantity for the TDCP report, a CSI processing unit duration for the TDCP report, or a minimum processing delay for the TDCP report. For example, referring to FIG. 3, the UE 102 receives 308 a CSI configuration for the TDCP report based on the UE capability transmitted 306, to the network entity 304, for the TDCP measurement and reporting. The TDCP reporting component 140 of the UE 102 or the UE apparatus 702 may perform the reception 508.

The UE 102 receives 510, from the network entity, a triggering indication for the TDCP report. For example, referring to FIG. 3, the UE 102 receives 310 a TDCP report trigger from the network entity 304. The TDCP reporting component 140 of the UE 102 or the UE apparatus 702 may perform the reception 510.

The UE 102 receives 512 a TRS from the network entity through the channel between the network entity and the UE. For example, referring to FIG. 3, the UE 102 receives 312 a TRS from the network entity 304. The TDCP reporting component 140 of the UE 102 or the UE apparatus 702 may perform the reception 512.

The UE 102 measures 514, based on the received TRS, the TDCP of the channel between the network entity and the UE-a measurement of the TDCP of the channel is associated with at least one of: the configured reporting quantity for the TDCP report, the CSI processing unit duration for the TDCP report, or the minimum processing delay for the TDCP report. For example, referring to FIG. 3, based on receiving 312 the TRS from the network entity 304, the UE 102 measures 314 a TDCP of a channel between the network entity 304 and the UE 102 based on a configured TDCP reporting quantity, a CSI processing unit occupancy duration, and/or a minimum processing delay for the TDCP report. The TDCP reporting component 140 of the UE 102 or the UE apparatus 702 may perform the measurement 514.

The UE 102 transmits 516 the TDCP report to the network entity based on the measurement of the TDCP of the channel. For example, referring to FIG. 3, the UE 102 transmits 316 the TDCP report to the network entity 304 based on the TDCP measurement of the configured TDCP reporting quantity, the CSI processing unit occupancy duration, and/or the minimum processing delay for the TDCP report. The TDCP reporting component 140 of the UE 102 or the UE apparatus 702 may perform the transmission 516.

The UE 102 transmits 530, to the network entity, at least one of an L1-RSRP report or an L1-SINR report for the TRS used to measure the TDCP of the channel. For example, referring to FIGs. 3 and 4C, the TDCP report transmitted 316 to the network entity 304 may correspond to the third table 430 that includes L1-RSRP information. The TDCP reporting component 140 of the UE 102 or the UE apparatus 702 may perform the transmission 530. FIG. 5 describes a method from a UE-side of a wireless communication link, whereas FIG. 6 describes a method from a network-side of the wireless communication link.

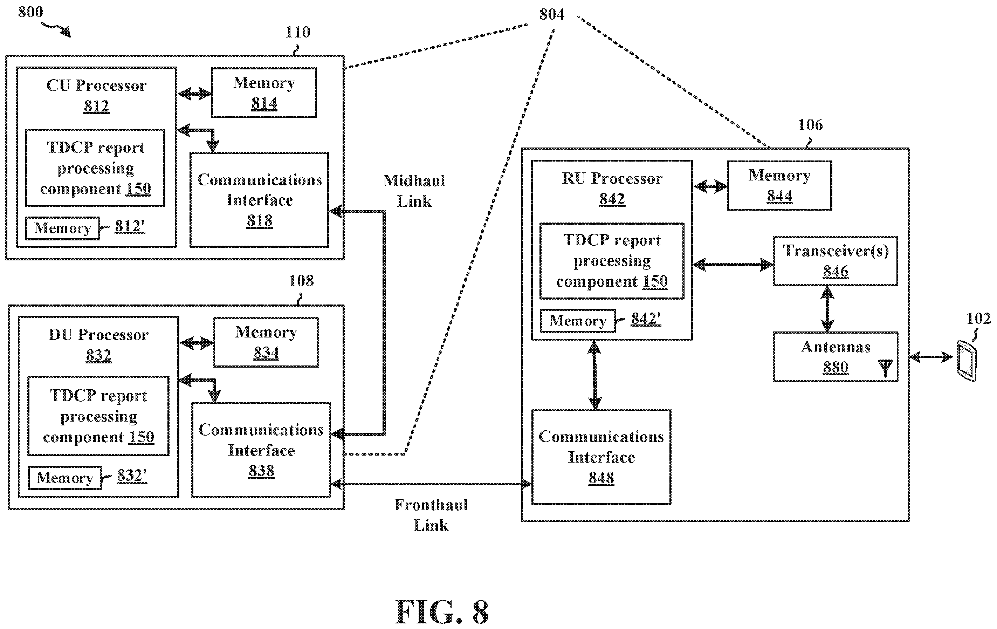

FIG. 6 is a flowchart 600 of a method of wireless communication at a network entity. With reference to FIGs. 1 and 8, the method may be performed by the base station 104 or one or more network entities 804 at the base station 104, which may correspond to the RU 106, the DU 108, the CU 110, an RU processor 842, a DU processor 832, a CU processor 812, etc. The base station 104 or the one or more network entities 804 at the base station 104 may include the memory 812'/832'/842', which may correspond to an entirety of the one or more network entities 804 or the base station 104, or a component of the one or more network entities 804 or the base station 104, such as the RU processor 842, the DU processor 832, or the CU processor 812.

The base station 104 or the one or more network entities at the base station 104 receives 606 UE capability information indicative of at least one of: a first UE capability for a measurement of a TDCP of a channel between a UE and the network entity or a second UE capability for TDCP reporting to a network entity of a TDCP report. For example, referring to FIG. 3, the base station 104 or the one or more network entities at the base station 104 receive 306, from the UE 102, the UE capability for TDCP measurement and reporting. The TDCP report processing component 150 of the base station 104 or the one or more network entities at the base station 104, such as the RU 106, the DU 108, and/or the CU 110 may perform the reception 606.

The base station 104 or the one or more network entities at the base station 104 transmits 608 a TDCP configuration based on the UE capability information-the TDCP configuration indicates a TDCP report structure for at least one of: a configured reporting quantity for the TDCP report, a CSI processing unit duration for the TDCP report, or a minimum processing delay for the TDCP report. For example, referring to FIG. 3, the base station 104 or the one or more network entities at the base station 104 transmits 308 a CSI configuration for the TDCP report based on the UE capability received 306, from the UE 102, for the TDCP measurement and reporting. The TDCP report processing component 150 of the base station 104 or the one or more network entities at the base station 104, such as the RU 106, the DU 108, and/or the CU 110 may perform the transmission 608.

The base station 104 or the one or more network entities at the base station 104 transmits 610, to the UE, a triggering indication for the TDCP report. For example, referring to FIG. 3, the network entity 304 transmits 310 a TDCP report trigger to the UE 102. The TDCP report processing component 150 of the base station 104 or the one or more network entities at the base station 104, such as the RU 106, the DU 108, and/or the CU 110 may perform the transmission 610.

The base station 104 or the one or more network entities at the base station 104 transmits 612 a TRS to the UE through the channel between the UE and the network entity. For example, referring to FIG. 3, the base station 104 or the one or more network entities at the base station 104 transmits 312 a TRS to the UE 102. The TDCP report processing component 150 of the base station 104 or the one or more network entities at the base station 104, such as the RU 106, the DU 108, and/or the CU 110 may perform the transmission 612.

The base station 104 or the one or more network entities at the base station 104 receives 616, from the UE based on the transmitted TRS, the TDCP report indicative of the measurement of the TDCP of the channel between the UE and the network entity-the measurement of the TDCP of the channel is associated with at least one of: the configured reporting quantity for the TDCP report, the CSI processing unit duration for the TDCP report, or the minimum processing delay for the TDCP report. For example, referring to FIG. 3, the base station 104 or the one or more network entities at the base station 104 receives 316, from the UE 102 after transmitting 312 the TRS to the UE 102, the TDCP report associated with the measurement 314 of the configured TDCP reporting quantity, the CSI processing unit occupancy duration, and/or the minimum processing delay for the TDCP report. The TDCP report processing component 150 of the base station 104 or the one or more network entities at the base station 104, such as the RU 106, the DU 108, and/or the CU 110 may perform the reception 616.

The base station 104 or the one or more network entities at the base station 104 receives 630, from the UE, at least one of an L1-RSRP report or an L1-SINR report for the TRS used for the measurement of the TDCP of the channel. For example, referring to FIGs. 3 and 4C, the TDCP report received 316 from the UE 102 may correspond to the third table 430 that includes L1-RSRP information. The TDCP report processing component 150 of the base station 104 or the one or more network entities at the base station 104, such as the RU 106, the DU 108, and/or the CU 110 may perform the reception 630. A UE apparatus 702, as described in FIG. 7, may perform the method of flowchart 500. The base station 104 or the one or more network entities 804 at the base station 104, as described in FIG. 8, may perform the method of flowchart 600.

FIG. 7 is a diagram 700 illustrating an example of a hardware implementation for a UE apparatus 702. The apparatus 702 may be the UE 102, a component of the UE 102, or may implement UE functionality. In some aspects, the apparatus 702 may include a wireless baseband processor 724 (also referred to as a modem) coupled to one or more transceivers 722 (e.g., wireless RF transceiver). The wireless baseband processor 724 may include on-chip memory 724'. In some aspects, the apparatus 702 may further include one or more subscriber identity modules (SIM) cards 720 and an application processor 706 coupled to a secure digital (SD) card 708 and a screen 710. The application processor 706 may include on-chip memory 706'.

The apparatus 702 may further include a Bluetooth module 712, a WLAN module 714, an SPS module 716 (e.g., GNSS module), and a cellular module 717 within the one or more transceivers 722. The Bluetooth module 712, the WLAN module 714, the SPS module 716, and the cellular module 717 may include an on-chip transceiver (TRX) (or in some cases, just a receiver (RX)). The Bluetooth module 712, the WLAN module 714, the SPS module 716, and the cellular module 717 may include their own dedicated antennas and/or utilize the antennas 780 for communication. The apparatus 702 may further include one or more sensor modules 718 (e.g., barometric pressure sensor / altimeter; motion sensor such as inertial management unit (IMU), gyroscope, and/or accelerometer(s); light detection and ranging (LIDAR), radio assisted detection and ranging (RADAR), sound navigation and ranging (SONAR), magnetometer, audio and/or other technologies used for positioning), additional modules of memory 726, a power supply 730, and/or a camera 732.

The wireless baseband processor 724 communicates through the transceiver(s) 722 via one or more antennas 780 with another UE 102s and/or with an RU associated with a base station 104. The wireless baseband processor 724 and the application processor 706 may each include a computer-readable medium / memory 724', 706', respectively. The additional modules of memory 726 may also be considered a computer-readable medium / memory. Each computer-readable medium / memory 724', 706', 726 may be non-transitory. The wireless baseband processor 724 and the application processor 706 are each responsible for general processing, including the execution of software stored on the computer-readable medium / memory. The software, when executed by the wireless baseband processor 724 / application processor 706, causes the wireless baseband processor 724 / application processor 706 to perform the various functions described. The computer-readable medium / memory may also be used for storing data that is manipulated by the wireless baseband processor 724 / application processor 706 when executing software. The wireless baseband processor 724 / application processor 706 may be a component of the UE 102. The apparatus 702 may be a processor chip (modem and/or application) and include just the wireless baseband processor 724 and/or the application processor 706, and in another configuration, the apparatus 702 may be the entire UE 102 and include the additional modules of the apparatus 702.

As discussed, the TDCP reporting component 140 is configured to receive a TRS from a network entity through a channel between the network entity and a UE 102. The TDCP reporting component 140 is further configured to measure, based on the received TRS, a TDCP of the channel between the network entity and the UE 102. A measurement of the TDCP of the channel is associated with at least one of: a configured reporting quantity for a TDCP report, a CSI processing unit duration for the TDCP report, or a minimum processing delay for the TDCP report. The TDCP reporting component 140 is further configured to transmit the TDCP report to the network entity based on the measuring the TDCP of the channel. The TDCP reporting component 140 may be within the wireless baseband processor 724, the application processor 706, or both the wireless baseband processor 724 and the application processor 706. The TDCP reporting component 140 may be one or more hardware components specifically configured to carry out the stated processes/algorithm, implemented by one or more processors configured to perform the stated processes/algorithm, stored within a computer-readable medium for implementation by one or more processors, or some combination thereof.

As shown, the apparatus 702 may include a variety of components configured for various functions. In one configuration, the apparatus 702, and in particular the wireless baseband processor 724 and/or the application processor 706, includes means for receiving a TRS from a network entity through a channel between the network entity and the UE; means for measuring, based on the received TRS, a TDCP of the channel between the network entity and the UE, a measurement of the TDCP of the channel associated with at least one of: a configured reporting quantity for a TDCP report, a CSI processing unit duration for the TDCP report, or a minimum processing delay for the TDCP report; and means for transmitting the TDCP report to the network entity based on the measuring. The apparatus 702 further includes means for transmitting, to the network entity, UE capability information indicative of at least one of: a first UE capability for the measuring the TDCP of the channel or a second UE capability for the transmitting the TDCP report to the network entity. The apparatus 702 further includes means for receiving a TDCP configuration based on the UE capability information, the TDCP configuration indicating a TDCP report structure for the at least one of the configured reporting quantity for the TDCP report, the CSI processing unit duration for the TDCP report, or the minimum processing delay for the TDCP report. The apparatus 702 further includes means for transmitting, to the network entity, at least one of an L1-RSRP report or an L1-SINR report for the TRS used to measure the TDCP of the channel. The means for transmitting the TDCP report to the network entity is further configured to: receive, from the network entity, a triggering indication for the TDCP report. The means may be the TDCP reporting component 140 of the apparatus 702 configured to perform the functions recited by the means.

FIG. 8 is a diagram 800 illustrating an example of a hardware implementation for one or more network entities 804. The one or more network entities 804 may be a base station, a component of the base station, or may implement base station functionality. The one or more network entities 804 may include at least one of a CU 110, a DU 108, or an RU 106. For example, depending on the layer functionality handled by the TDCP report processing component 150, the one or more network entities 804 may include the CU 110; both the CU 110 and the DU 108; each of the CU 110, the DU 108, and the RU 106; the DU 108; both the DU 108 and the RU 106; or the RU 106.

The CU 110 may include a CU processor 812. The CU processor 812 may include on-chip memory 812'. In some aspects, the CU 110 may further include additional memory modules 814 and a communications interface 818. The CU 110 communicates with the DU 108 through a midhaul link, such as an F1 interface. The DU 108 may include a DU processor 832. The DU processor 832 may include on-chip memory 832'. In some aspects, the DU 108 may further include additional memory modules 834 and a communications interface 838. The DU 108 communicates with the RU 106 through a fronthaul link. The RU 106 may include an RU processor 842. The RU processor 842 may include on-chip memory 842'. In some aspects, the RU 106 may further include additional memory modules 844, one or more transceivers 846, antennas 880, and a communications interface 848. The RU 106 communicates wirelessly with the UE 102.

The on-chip memory 812', 832', 842' and the additional memory modules 814, 834, 844 may each be considered a computer-readable medium / memory. Each computer-readable medium / memory may be non-transitory. Each of the processors 812, 832, 842 is responsible for general processing, including the execution of software stored on the computer-readable medium / memory. The software, when executed by the corresponding processor(s) causes the processor(s) to perform the various described functions. The computer-readable medium / memory may also be used for storing data that is manipulated by the processor(s) when executing software.

As discussed, the TDCP report processing component 150 is configured to transmit a TRS to a UE through a channel between the UE and the network entity. The TDCP report processing component 150 is further configured to receive, from the UE based on the transmitted TRS, a TDCP report indicative of a measurement of the TDCP of the channel between the UE and the network entity. The measurement of the TDCP of the channel is associated with at least one of: a configured reporting quantity for the TDCP report, a CSI processing unit duration for the TDCP report, or a minimum processing delay for the TDCP report. The TDCP report processing component 150 may be within one or more processors of one or more of the CU 110, DU 108, and the RU 106. The TDCP report processing component 150 may be one or more hardware components specifically configured to carry out the stated processes/algorithm, implemented by one or more processors configured to perform the stated processes/algorithm, stored within a computer-readable medium for implementation by one or more processors, or some combination thereof.

The one or more network entities 804 may include a variety of components configured for various functions. In one configuration, the one or more network entities 804 include means for transmitting a TRS to a UE through a channel between the UE and the network entity; and means for receiving, from the UE based on the transmitted TRS, a TDCP report indicative of a measurement of the TDCP of the channel between the UE and the network entity, the measurement of the TDCP of the channel associated with at least one of: a configured reporting quantity for the TDCP report, a CSI processing unit duration for the TDCP report, or a minimum processing delay for the TDCP report. The one or more network entities 804 further include means for receiving UE capability information indicative of at least one of: a first UE capability for the measurement of the TDCP of the channel or a second UE capability for TDCP reporting of the TDCP report to the network entity. The one or more network entities 804 further include means for transmitting a TDCP configuration based on the UE capability information, the TDCP configuration indicating a TDCP report structure for the at least one of: the configured reporting quantity for the TDCP report, the CSI processing unit duration for the TDCP report, or the minimum processing delay for the TDCP report. The one or more network entities 804 further include means for receiving, from the UE, at least one of an LI-RSRP report or an L1-SINR report for the TRS used for the measurement of the TDCP of the channel. The means for receiving the TDCP report from the UE is further configured to: transmit, to the UE, a triggering indication for the TDCP report. The means may be the TDCP report processing component 150 of the one or more network entities 804 configured to perform the functions recited by the means.

The specific order or hierarchy of blocks in the processes and flowcharts disclosed herein is an illustration of example approaches. Hence, the specific order or hierarchy of blocks in the processes and flowcharts may be rearranged. Some blocks may also be combined or deleted. Optional blocks of the processes and flowcharts may be indicated by dashed lines. The accompanying method claims present elements of the various blocks in an example order, and are not limited to the specific order or hierarchy presented in the claims, processes, and flowcharts.

The detailed description set forth herein describes various configurations in connection with the drawings and does not represent the only configurations in which the concepts described herein may be practiced. The detailed description includes specific details for the purpose of providing a thorough explanation of various concepts. However, these concepts may be practiced without these specific details. In some instances, well known structures and components are shown in block diagram form in order to avoid obscuring such concepts.

Aspects of wireless communication systems, such as telecommunication systems, are presented with reference to various apparatuses and methods. These apparatuses and methods are described in the following detailed description and are illustrated in the accompanying drawings by various blocks, components, circuits, processes, call flows, systems, algorithms, etc. (collectively referred to as "elements"). These elements may be implemented using electronic hardware, computer software, or combinations thereof. Whether such elements are implemented as hardware or software depends upon the particular application and design constraints imposed on the overall system.

An element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems-on-chip (SoC), baseband processors, field programmable gate arrays (FPGAs), programmable logic devices (PLDs), state machines, gated logic, discrete hardware circuits, and other similar hardware configured to perform the various functionality described throughout this disclosure. One or more processors in the processing system may execute software, which may be referred to as software, firmware, middleware, microcode, hardware description language, or otherwise. Software shall be construed broadly to mean instructions, instruction sets, code, code segments, program code, programs, subprograms, software components, applications, software applications, software packages, routines, subroutines, objects, executables, threads of execution, procedures, functions, or any combination thereof.

If the functionality described herein is implemented in software, the functions may be stored on, or encoded as, one or more instructions or code on a computer-readable medium, such as a non-transitory computer-readable storage medium. Computer-readable media includes computer storage media and can include a random-access memory (RAM), a read-only memory (ROM), an electrically erasable programmable ROM (EEPROM), optical disk storage, magnetic disk storage, other magnetic storage devices, combinations of these types of computer-readable media, or any other medium that can be used to store computer executable code in the form of instructions or data structures that can be accessed by a computer. Storage media may be any available media that can be accessed by a computer.

Aspects, implementations, and/or use cases described herein may be implemented across many differing platform types, devices, systems, shapes, sizes, and packaging arrangements. For example, the aspects, implementations, and/or use cases may come about via integrated chip implementations and other non-module-component based devices, such as end-user devices, vehicles, communication devices, computing devices, industrial equipment, retail/purchasing devices, medical devices, artificial intelligence (AI)-enabled devices, machine learning (ML)-enabled devices, etc. The aspects, implementations, and/or use cases may range from chip-level or modular components to non-modular or non-chip-level implementations, and further to aggregate, distributed, or original equipment manufacturer (OEM) devices or systems incorporating one or more techniques described herein.

Devices incorporating the aspects and features described herein may also include additional components and features for the implementation and practice of the claimed and described aspects and features. For example, transmission and reception of wireless signals necessarily includes a number of components for analog and digital purposes, such as hardware components, antennas, RF-chains, power amplifiers, modulators, buffers, processor(s), interleavers, adders/summers, etc. Techniques described herein may be practiced in a wide variety of devices, chip-level components, systems, distributed arrangements, aggregated or disaggregated components, end-user devices, etc., of varying configurations.

The description herein is provided to enable a person skilled in the art to practice the various aspects described herein. Various modifications to these aspects will be readily apparent to those skilled in the art, and the generic principles defined herein may be applied to other aspects. Thus, the claims are not limited to the aspects described herein, but are to be interpreted in view of the full scope of the present disclosure consistent with the language of the claims.

Reference to an element in the singular does not mean "one and only one" unless specifically stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. Unless specifically stated otherwise, the term "some" refers to one or more. Combinations such as "at least one of A, B, or C" or "one or more of A, B, or C" include any combination of A, B, and/or C, such as A and B, A and C, B and C, or A and B and C, and may include multiples of A, multiples of B, and/or multiples of C, or may include A only, B only, or C only. Sets should be interpreted as a set of elements where the elements number one or more.

The words "module," "mechanism," "element," "device," and the like may not be a substitute for the word "means." As such, no claim element is to be construed as a means plus function unless the element is expressly recited using the phrase "means for." As used herein, the phrase "based on" shall not be construed as a reference to a closed set of information, one or more conditions, one or more factors, or the like. In other words, the phrase "based on A", where "A" may be information, a condition, a factor, or the like, shall be construed as "based at least on A" unless specifically recited differently.

**Claims**

1. A method of wireless communication at a user equipment, UE (102), comprising:

   receiving (308, 508), from a network entity (304), a channel state information, CSI, report configuration configuring a reporting quantity set to time domain channel property, TDCP, for a TDCP report, the CSI report configuration indicating a tracking reference signal, TRS, as a channel measurement resource, CMR, and omitting an interference measurement resource, IMR;
   receiving (312, 512), from the network entity (304), the TRS based on the CSI report configuration;
   measuring (314, 514), based on the received TRS, the TDCP of a channel between the network entity (304) and the UE (102); and
   transmitting (316, 516), to the network entity (304), the TDCP report based on the measuring of the TDCP of the channel.

2. The method of claim 1, further comprising transmitting (306, 506), to the network entity (304), UE capability information indicative of at least one of: a first UE capability for the measuring the TDCP of the channel or a second UE capability for the transmitting the TDCP report to the network entity.

3. The method of any of claims 1-2, wherein the CSI report configuration is based on UE capability information, the CSI report configuration indicating a TDCP report structure for at least one of the configured reporting quantity for the TDCP report or a CSI processing unit duration for the TDCP report, wherein the measuring of the TDCP of the channel is associated with the CSI processing unit duration for the TDCP report, wherein the CSI report configuration is received as part of a radio resource control, RRC, message and corresponds to a set of available TRSs for the measuring the TDCP of the channel, and wherein at least a subset of TRSs of the set of available TRSs is selected for the measuring the TDCP of the channel based on at least one of a medium access control-control element, MAC-CE, or downlink control information, DCI.

4. The method of any of claims 1-3, wherein the TRS corresponds to a channel state information-reference signal, CSI-RS, resource set, wherein the configured reporting quantity for the TDCP report corresponds to at least one of: a first maximum number of CSI-RS resources per CSI report configuration for the TDCP report, a second maximum number of CSI-RS resources across a plurality of CSI report configurations for the TDCP report, or a third maximum number of CSI report configurations for the TDCP report, and wherein the first maximum number of the CSI-RS resources and the second maximum number of the CSI-RS resources are configured per component carrier (CC), per frequency band, or per band combination.

5. The method of any of claims 1-4, wherein the TRS is configured in a transmission configuration indicator, TCI, state for at least one of a physical downlink control channel, PDCCH, or a physical downlink shared channel, PDSCH, associated with the TRS.

6. The method of any of claims 1-5, wherein the TDCP report is indicative of at least one of: a Doppler shift for one or more strongest paths, a maximum Doppler shift for a strongest path of the one or more strongest paths, a relative Doppler shift for the one or more strongest paths, a maximum relative Doppler shift for the strongest path of the one or more strongest paths, or a Doppler spread for the one or more strongest paths.

7. The method of any of claims 1-6, wherein the one or more strongest paths are based on a channel impulse response, CIR, associated with the TRS, and wherein a number of the one or more strongest paths is at least one of: configured based on the RRC message, configured based on the MAC-CE, indicated based on the DCI, based on a predefined protocol, based on a reference signal received power, RSRP, associated with a plurality of paths that include the one or more strongest paths, or based on a threshold power difference from the strongest path of the one or more strongest paths.

8. The method of any of claims 1-7, further comprising transmitting (530), to the network entity (304), at least one of a layer 1, L1, RSRP, L1-RSRP, report or an L1 signal-to-interference-plus-noise ratio, SINR, L1-SINR, report for the TRS used to measure the TDCP of the channel.

9. The method of any of claims 1-8, wherein a first number of CSI processing units occupied by the UE (102) during the CSI processing unit duration is based on a second number of TDCPs of the channel measured by the UE (102) for a corresponding number of TRSs and a UE capability.

10. The method of any of claims 1-9, wherein the transmitting the TDCP report to the network entity (304) further comprises:
receiving (310, 510), from the network entity (304), a triggering indication for the TDCP report.

11. The method of any of claims 1-10, wherein the TDCP report is prioritized relative to at least one of the L1-RSRP report, the L1-SINR report, or a CSI report that excludes the L1-RSRP report, the L1-SINR report, and the TDCP report.

12. The method of any of claims 3-11, wherein the TDCP report indicates a first total number of TDCPs of the channel that is less than or equal to a second total number of the TRSs selected for the measuring the TDCP of the channel, and wherein the TDCP report further indicates at least one of: a corresponding first total number of CSI-reference signal, CSI-RS, resource set indexes, a beam report, or the CSI report.

13. A method of wireless communication at a network entity (304), comprising:

transmitting (308, 508), to a user equipment, UE, (102), a channel state information, CSI, report configuration configuring a reporting quantity set to time domain channel property, TDCP, for a TDCP report, the CSI report configuration indicating a tracking reference signal, TRS, as a channel measurement resource, CMR, and omitting an interference measurement resource, IMR;
transmitting (312, 612), to the UE (102), the TRS based on the CSI report configuration; and
receiving (316, 616), from the UE (102), the TDCP report indicating a measurement of the TDCP of a channel between the UE (102) and the network entity (304), the measurement of the TDCP of the channel being based on the TRS.

14. The method of claim 13, wherein the TRS corresponds to a channel state information-reference signal, CSI-RS, resource set, wherein the configured reporting quantity for the TDCP report corresponds to at least one of: a first maximum number of CSI-RS resources per CSI report configuration for the TDCP report, a second maximum number of CSI-RS resources across a plurality of CSI report configurations for the TDCP report, or a third maximum number of CSI report configurations for the TDCP report, and wherein the first maximum number of the CSI-RS resources and the second maximum number of the CSI-RS resources are configured per component carrier (CC), per frequency band, or per band combination

15. An apparatus for wireless communication comprising a memory and at least one processor coupled to the memory and configured to implement a method as in any of claims 1-14.

**Patentansprüche**

1. Verfahren zur drahtlosen Kommunikation an einer Benutzerausrüstung (user equipment) UE (102), umfassend:

Empfangen (308, 508) einer Kanalzustandsinformations- (state information, CSI)-Meldungskonfiguration von einer Netzwerkentität (304), die einen Meldungsgrößensatz auf Zeitbereichskanal-Eigenschaften (time domain channel property, TDCP) für eine TDCP-Meldung konfiguriert, wobei die CSI-Meldungskonfiguration ein Nachführreferenzsignal (tracking reference signal, TRS) als eine Kanalmessressource (channel measurement resource, CMR) angibt und eine Interferenz-Messressource (interference measurement resource, IMR) weglässt;
Empfangen (312, 512) des TRS basierend auf der CSI-Berichtskonfiguration von der Netzwerkentität (304);
Messen (314, 514) der TDCP eines Kanals zwischen der Netzwerkentität (304) und der UE (102) basierend auf dem empfangenen TRS; und
Übertragen (316, 516) der TDCP-Meldung basierend auf der Messung der TDCP des Kanals an die Netzwerkentität (304).

2. Verfahren nach Anspruch 1, ferner umfassend das Übertragen (306, 506) von UE-Fähigkeitsinformationen an die Netzwerkentität (304), die mindestens eines von Folgendem angeben: eine erste UE-Fähigkeit zum Messen der TDCP des Kanals oder eine zweite UE-Fähigkeit zum Übertragen der TDCP-Meldung an die Netzwerkentität.

3. Verfahren nach einem der Ansprüche 1-2, wobei die CSI-Meldungskonfiguration auf UE-Fähigkeitsinformationen basiert, wobei die CSI-Meldungskonfiguration eine TDCP-Meldungsstruktur für mindestens eine der konfigurierten Meldungsgrößen für die TDCP-Meldung oder eine CSI-Verarbeitungseinheitsdauer für die TDCP-Meldung angibt, wobei die Messung der TDCP des Kanals der CSI-Verarbeitungseinheitsdauer der TDCP-Meldung zugeordnet ist, wobei die CSI-Meldungskonfiguration als Teil einer Funkressourcensteuerungsnachricht (radio resource control, RRC) empfangen wird und einem Satz verfügbarer TRS zum Messen des TDCP des Kanals entspricht, und wobei mindestens ein Teilsatz von TRS des Satzes verfügbarer TRS zum Messen der TDCP des Kanals basierend auf mindestens einem von einem Medienzugriffssteuerungselement (medium access control-control element, MAC-CE) oder einer Downlink-Steuerungsinformation (downlink control information, DCI) ausgewählt wird.

4. Verfahren nach einem der Ansprüche 1-3, wobei das TRS einem Kanalzustandsinformations-Referenzsignal-Ressourcensatz (channel state information-reference signal, CSI-RS) entspricht, wobei die dazu konfigurierte Meldungsgröße für die TDCP-Meldung mindestens einem von Folgendem entspricht: einer ersten maximalen Anzahl von CSI-RS-Ressourcen pro CSI-Meldungskonfiguration für die TDCP-Meldung, einer zweiten maximalen Anzahl von CSI-RS-Ressourcen über eine Vielzahl von CSI-Meldungskonfigurationen für die TDCP-Meldung oder einer dritten maximalen Anzahl von CSI-Meldungskonfigurationen für die TDCP-Meldung, und wobei die erste maximale Anzahl der CSI-RS-Ressourcen und die zweite maximale Anzahl der CSI-RS-Ressourcen pro Komponententräger (CC), pro Frequenzband oder pro Bandkombination konfiguriert sind.

5. Verfahren nach einem der Ansprüche 1-4, wobei das TRS in einem Übertragungskonfigurationsindikator-Zustand (transmission configuration indicator, TCI) für mindestens einen physikalischen Downlink-Steuerkanal (physical downlink control channel, PDCCH) oder einen physikalischen Downlink-Shared-Kanal (physical downlink shared channel, PDSCH), der dem TRS zugeordnet ist, konfiguriert ist.

6. Verfahren nach einem der Ansprüche 1-5, wobei die TDCP-Meldung mindestens eines von Folgenden angibt: eine Dopplerverschiebung für einen oder mehrere stärkste Pfade, eine maximale Dopplerverschiebung für einen stärksten Pfad der einen oder mehreren stärksten Pfade, eine relative Dopplerverschiebung für die einen oder mehreren stärksten Pfade, eine maximale relative Dopplerverschiebung für den stärksten Pfad der einen oder mehreren stärksten Pfade oder eine Dopplerverschiebung für die einen oder mehreren stärksten Pfade.

7. Verfahren nach einem der Ansprüche 1-6, wobei der eine oder die mehreren stärksten Pfade auf einer Kanalimpulsantwort (channel impulse response, CIR) basieren, die dem TRS zugeordnet ist und wobei eine Anzahl der einen oder mehreren stärksten Pfade mindestens eines von Folgendem ist: basierend auf der RRC-Nachricht konfiguriert, basierend auf dem MAC-CE konfiguriert, basierend auf dem DCI angegeben, basierend auf einem vordefinierten Protokoll, basierend auf einer empfangenen Referenzsignalleistung, RSRP, die einer Vielzahl von Pfaden zugeordnet ist, die den einen oder die mehreren stärksten Pfade beinhaltet oder basierend auf einem Schwellenwert für den Leistungsunterschied vom stärksten Pfad der einen oder mehreren stärksten Pfade.

8. Verfahren nach einem der Ansprüche 1-7, ferner umfassend das Senden (530) mindestens einer einer Schicht 1, L1, RSRP, L1-RSRP, Meldung oder eines L1-Signal-zu-Interferenz-plus-Rausch-Verhältnisses (signal-to-interference-plus-noise ratio, SINR), L1-SINR, Meldung für das TRS, das zum Messen der TDCP des Kanals verwendet wird, an die Netzwerkinentität (304).

9. Verfahren nach einem der Ansprüche 1 bis 8, wobei eine erste Anzahl von CSI-Verarbeitungseinheiten, die von der UE (102) während der CSI-Verarbeitungseinheitsdauer belegt sind, auf einer zweiten Anzahl von TDCP des Kanals basiert, die von der UE (102) für eine entsprechende Anzahl von TRS gemessen werden, und einer UE-Fähigkeit.

10. Verfahren nach einem der Ansprüche 1-9, wobei das Übertragen der TDCP-Meldung an die Netzwerkentität (304) ferner Folgendes umfasst:
Empfangen (310, 510) einer auslösenden Angabe für die TDCP-Meldung von der Netzwerk-Entität (304).

11. Verfahren nach einem der Ansprüche 1-10, wobei die TDCP-Meldung relativ zu mindestens einer der L1-RSRP-Meldung, der L1-SINR-Meldung oder einer CSI-Meldung priorisiert wird, die die L1-RSRP-Meldung, die L1-SINR-Meldung und die TDCP-Meldung ausschließt.

12. Verfahren nach einem der Ansprüche 3-11, wobei die TDCP-Meldung eine erste Gesamtzahl von TDCP des Kanals angibt, die kleiner oder gleich einer zweiten Gesamtzahl des TRS ist, die für die Messung des TDCP des Kanals ausgewählt wurden, und wobei die TDCP-Meldung ferner mindestens eines von Folgendem angibt: eine entsprechende erste Gesamtzahl von CSI-Referenzsignalen, CSI-RS, Ressourcensatz-Indizes, eine Strahlmeldung oder die CSI-Meldung.

13. Verfahren zur drahtlosen Kommunikation in einer Netzwerkentität (304), umfassend:

Übertragen (308, 508) einer Kanalzustandsinformations-, CSI-, Meldungskonfiguration an eine Benutzerausrüstung, UE, (102), die einen Meldungsgrößensatz auf Zeitbereichskanal-Eigenschaften, TDCP, für eine TDCP-Meldung konfiguriert, wobei die CSI-Meldungskonfiguration ein Nachführreferenzsignal (tracking reference signal, TRS) als eine Kanalmessressource (channel measurement resource, CMR) angibt und eine Interferenz-Messressource (interference measurement resource, IMR) weglässt;
Übertragen (312, 612) des TRS basierend auf der CSI-Berichtskonfiguration an die UE (102); und
Empfangen (316, 616) der TDCP-Meldung von der UE (102), das eine Messung der TDCP eines Kanals zwischen der UE (102) und der Netzwerkentität (304) angibt, wobei die Messung der TDCP des Kanals basierend auf des TRS erfolgt.

14. Verfahren nach Anspruch 13, wobei das TRS einem Kanalzustandsinformations-Referenzsignal-Ressourcensatz (channel state information-reference signal, CSI-RS) entspricht, wobei die dazu konfigurierte Meldungsgröße für die TDCP-Meldung mindestens einem von Folgendem entspricht: einer ersten maximalen Anzahl von CSI-RS-Ressourcen pro CSI-Meldungskonfiguration für die TDCP-Meldung, einer zweiten maximalen Anzahl von CSI-RS-Ressourcen über eine Vielzahl von CSI-Meldungskonfigurationen für die TDCP-Meldung oder einer dritten maximalen Anzahl von CSI-Meldungskonfigurationen für die TDCP-Meldung, und wobei die erste maximale Anzahl der CSI-RS-Ressourcen und die zweite maximale Anzahl der CSI-RS-Ressourcen pro Komponententräger (CC), pro Frequenzband oder pro Bandkombination konfiguriert sind.

15. Vorrichtung zur drahtlosen Kommunikation, umfassend einen Speicher und mindestens einen Prozessor, der mit dem Speicher gekoppelt und dazu konfiguriert ist, ein Verfahren nach einem der Ansprüche 1-14 zu implementieren.

## Revendications

1. Procédé de communication sans fil au niveau d'un équipement utilisateur, UE (102), comprenant :

la réception (308, 508), à partir d'une entité de réseau (304), d'une configuration de rapport d'informations d'état de canal, CSI, configurant une quantité de rapport définie sur la propriété de canal de domaine temporel, TDCP, pour un rapport TDCP, la configuration de rapport CSI indiquant un signal de référence de suivi, TRS, comme ressource de mesure de canal, CMR, et omettant une ressource de mesure d'interférence, IMR ;
la réception (312, 512), à partir de l'entité de réseau (304), du TRS basé sur la configuration de rapport CSI ;
la mesure (314, 514), sur la base du TRS reçu, du TDCP d'un canal entre l'entité de réseau (304) et l'UE (102) ; et
la transmission (316, 516), à l'entité de réseau (304), du rapport TDCP basé sur la mesure du TDCP du canal.

2. Procédé selon la revendication 1, comprenant également la transmission (306, 506), à l'entité de réseau (304), d'informations de capacité d'UE indiquant au moins l'une d'une première capacité d'UE pour la mesure du TDCP du canal ou d'une seconde capacité d'UE pour la transmission de rapport TDCP à l'entité de réseau.

3. Procédé selon l'une quelconque des revendications 1 à 2, dans lequel la configuration de rapport CSI est basée sur des informations de capacité d'UE, la configuration de rapport CSI indiquant une structure de rapport TDCP pour au moins l'une de la quantité de rapport configurée pour le rapport TDCP ou d'une durée d'unité de traitement CSI pour le rapport TDCP, dans lequel la mesure du TDCP du canal est associée à la durée de l'unité de traitement CSI pour le rapport TDCP, dans lequel la configuration de rapport CSI est reçue dans le cadre d'un message de commande de ressources radio, RRC, et correspond à un ensemble de TRS disponibles pour la mesure du TDCP du canal, et dans lequel au moins un sous-ensemble de TRS de l'ensemble de TRS disponibles est sélectionné pour la mesure du TDCP du canal sur la base d'au moins l'un d'un élément de commande d'accès au support, MAC-CE, ou d'informations de commande de liaison descendante, DCI.

4. Procédé selon l'une quelconque des revendications 1 à 3, dans lequel le TRS correspond à un ensemble de ressources de signal de référence d'informations d'état de canal, CSI-RS, dans lequel la quantité de rapport configurée pour le rapport TDCP correspond à au moins l'un d'un premier nombre maximal de ressources CSI-RS par configuration de rapport CSI pour le rapport TDCP, d'un deuxième nombre maximal de ressources CSI-RS sur une pluralité de configurations de rapport CSI pour le rapport TDCP, ou d'un troisième nombre maximal de configurations de rapport CSI pour le rapport TDCP, et dans lequel le premier nombre maximal de ressources CSI-RS et le deuxième nombre maximal de ressources CSI-RS sont configurés par porteuse composante (CC), par bande de fréquences ou par combinaison de bandes.

5. Procédé selon l'une quelconque des revendications 1 à 4, dans lequel le TRS est configuré dans un état d'indicateur de configuration de transmission, TCI, pour au moins l'un d'un canal de commande de liaison descendante physique, PDCCH, ou d'un canal partagé de liaison descendante physique, PDSCH, associé au TRS.

6. Procédé selon l'une quelconque des revendications 1 à 5, dans lequel le rapport TDCP indique au moins l'un d'un décalage Doppler pour un ou plusieurs trajets les plus forts, d'un décalage Doppler maximal pour un trajet le plus fort parmi les un ou plusieurs trajets les plus forts, d'un décalage Doppler relatif pour les un ou plusieurs trajets les plus forts, d'un décalage Doppler relatif maximal pour le trajet le plus fort parmi les un ou plusieurs trajets les plus forts, ou d'une dispersion Doppler pour les un ou plusieurs trajets les plus forts.

7. Procédé selon l'une quelconque des revendications 1 à 6, dans lequel les un ou plusieurs chemins les plus forts sont basés sur une réponse impulsionnelle de canal (CIR) associée au TRS, et dans lequel un certain nombre des un ou plusieurs chemins les plus forts est configuré au moins selon l'une des manières suivantes : sur la base du message RRC, sur la base du MAC-CE, indiqué sur la base du DCI, sur la base d'un protocole prédéfini, sur la base d'une puissance de signal de référence reçue, RSRP, associée à une pluralité de chemins qui comportent les un ou plusieurs chemins les plus forts, ou sur la base d'une différence de puissance de seuil par rapport au chemin le plus fort des un ou plusieurs chemins les plus forts.

8. Procédé selon l'une quelconque des revendications 1 à 7, comprenant également la transmission (530), à l'entité de réseau (304), d'au moins l'un d'un rapport de couche 1, L1, RSRP, L1-RSRP ou d'un rapport de rapport signal sur interférence plus bruit L1, SINR, L1-SINR pour le TRS utilisé pour mesurer le TDCP du canal.

9. Procédé selon l'une quelconque des revendications 1 à 8, dans lequel un premier nombre d'unités de traitement CSI occupées par l'UE (102) pendant la durée de l'unité de traitement CSI est basé sur un deuxième nombre de TDCP du canal mesuré par l'UE (102) pour un nombre correspondant de TRS et une capacité d'UE.

10. Procédé selon l'une quelconque des revendications 1 à 9, dans lequel la transmission du rapport TDCP à l'entité de réseau (304) comprend également : la réception (310, 510), à partir de l'entité de réseau (304), d'une indication de déclenchement pour le rapport TDCP.

11. Procédé selon l'une quelconque des revendications 1 à 10, dans lequel le rapport TDCP est prioritaire par rapport à au moins l'un du rapport L1-RSRP, du rapport L1-SINR ou d'un rapport CSI qui exclut le rapport L1-RSRP, le rapport L1-SINR et le rapport TDCP.

12. Procédé selon l'une quelconque des revendications 3 à 11, dans lequel le rapport TDCP indique un premier nombre total de TDCP du canal qui est inférieur ou égal à un deuxième nombre total des TRS sélectionnés pour la mesure du TDCP du canal, et dans lequel le rapport TDCP indique également au moins l'un d'un premier nombre total correspondant de signaux de référence CSI, CSI-RS, d'index d'ensemble de ressources, d'un rapport de faisceau ou du rapport CSI.

13. Procédé de communication sans fil au niveau d'une entité de réseau (304), comprenant :

la transmission (308, 508), à un équipement utilisateur, UE, (102), d'une configuration de rapport d'informations d'état de canal, CSI, configurant une quantité de rapport définie sur la propriété de canal de domaine temporel, TDCP, pour un rapport TDCP, la configuration de rapport CSI indiquant un signal de référence de suivi, TRS, comme ressource de mesure de canal, CMR, et omettant une ressource de mesure d'interférence, IMR ;
la transmission (312, 612), à l'UE (102), du TRS basé sur la configuration de rapport CSI ; et
la réception (316, 616), à partir de l'UE (102), du rapport TDCP indiquant une mesure du TDCP d'un canal entre l'UE (102) et l'entité de réseau (304), la mesure du TDCP du canal étant basée sur le TRS.

14. Procédé selon la revendication 13, dans lequel le TRS correspond à un ensemble de ressources de signal de référence d'informations d'état de canal, CSI-RS, dans lequel la quantité de rapport configurée pour le rapport TDCP correspond à au moins l'un d'un premier nombre maximal de ressources CSI-RS par configuration de rapport CSI pour le rapport TDCP, d'un deuxième nombre maximal de ressources CSI-RS sur une pluralité de configurations de rapport CSI pour le rapport TDCP, ou d'un troisième nombre maximal de configurations de rapport CSI pour le rapport TDCP, et dans lequel le premier nombre maximal de ressources CSI-RS et le deuxième nombre maximal de ressources CSI-RS sont configurés par porteuse composante (CC), par bande de fréquences ou par combinaison de bandes.

15. Appareil de communication sans fil comprenant une mémoire et au moins un processeur couplé à la mémoire et configuré pour mettre en œuvre un procédé selon l'une quelconque des revendications 1 à 14.

FIG. 1

100

RU
106

DU
108

CU
110

Base Station

104

150

TDCP report processing component

114

UE
102c

Access link

RU
106c

Fronthaul link

104b

DU
108b

Midhaul link (F1 interface)

E2

128

130

Near-real time RIC

O-cloud

A1

O2

190c

102d

Access link (Uu interface)

104a

106d

RU

Fronthaul link

112

BBU

Fronthaul link

Midhaul link

DU

CU

108d

190d

190

190a

132

UE
102b

RU
106b

134

Backhaul link (Xn interface)

CU
110a

Backhaul link

190b

116

SMO framework

Non-real time RIC
118

O1

120

AMF
121

UDM
124

SMF
122

GMLC
125

UPF
123

LMF
126

Core network

Backhaul link (NG interface)

UE
102s

Access link

RU
106a

136

Fronthaul link

DU
108a

Midhaul link (F1 interface)

190

Access link

Sidelink

UE
102a

Access link

138

Base Station

104a

190e

Backhaul link (Xn interface)

140

TDCP reporting component

UE
102

EP 4 505 787 B1

**FIG. 2A**

**FIG. 2B**

EP 4 505 787 B1

300

304  Network Entity          102  UE

UE capability for TDCP measurement and reporting  306

308  CSI configuration for TDCP report
(e.g., *CSI-reportConfig*)

310  TDCP report trigger

312  TRS(s)

314  Measure TDCP based on
configured TDCP reporting
quantity, CSI processing unit
occupancy duration, and
minimum processing delay

TDCP report  316

**FIG. 3**

EP 4 505 787 B1

410

| |
|---|
| CSI-RS resource set index 1, if reported |
| CSI-RS resource set index 2, if reported |
| . . . |
| CSI-RS resource set index V, if reported |
| TDCP for CSI-RS resource set index 1 |
| TDCP for CSI-RS resource set index 2, if reported |
| . . . |
| TDCP for CSI-RS resource set index V, if reported |

## FIG. 4A

420

| |
|---|
| CSI-RS resource set index 1, if reported |
| CSI-RS resource set index 2, if reported |
| . . . |
| CSI-RS resource set index V, if reported |
| First TDCP for CSI-RS resource set index 1 |
| First TDCP for CSI-RS resource set index 2, if reported |
| . . . |
| First TDCP for CSI-RS resource set index V, if reported |
| Second TDCP for CSI-RS resource set index 1 |
| Second TDCP for CSI-RS resource set index 2, if reported |
| . . . |
| Second TDCP for CSI-RS resource set index V, if reported |
| . . . |

## FIG. 4B

430

| |
|---|
| CSI-RS resource set index 1, if reported |
| CSI-RS resource set index 2, if reported |
| . . . |
| CSI-RS resource set index V, if reported |
| L1-RSRP for CSI-RS resource set index 1 |
| Differential L1-RSRP for CSI-RS resource set index 2, if reported |
| . . . |
| Differential L1-RSRP for CSI-RS resource set index V, if reported |
| TDCP for CSI-RS resource set index 1 |
| TDCP for CSI-RS resource set index 2, if reported |
| . . . |
| TDCP for CSI-RS resource set index V, if reported |
| . . . |

## FIG. 4C

500 ⤹

506

┌─────────────────────────────────────────┐
│ Transmit, to a network entity, a UE capability report │
│ indicative of at least one of: a first UE capability for │
│ measurement of a TDCP of a channel between the │
│ network entity and the UE or a second UE capability │
│ for transmission of a TDCP report to the network entity │
└─────────────────────────────────────────┘

508

┌─────────────────────────────────────────┐
│ Receive a TDCP configuration based on the UE │
│ capability report—the TDCP configuration indicates a │
│ TDCP report structure for at least one of a configured │
│ reporting quantity for the TDCP report, a CSI │
│ processing unit duration for the TDCP report, or a │
│ minimum processing delay for the TDCP report │
└─────────────────────────────────────────┘

510

┌─────────────────────────────────────────┐
│ │
│ │
│ Receive, from the network entity, a triggering indication for │
│ the TDCP report │
│ │
│ │
└─────────────────────────────────────────┘

512

┌─────────────────────────────────────────┐
│ Receive a TRS from the network entity through the │
│ channel between the network entity and the UE │
└─────────────────────────────────────────┘

514

┌─────────────────────────────────────────┐
│ Measure, based on the received TRS, the TDCP of the │
│ channel between the network entity and the UE—a │
│ measurement of the TDCP of the channel is associated │
│ with at least one of: the configured reporting quantity │
│ for the TDCP report, the CSI processing unit duration │
│ for the TDCP report, or the minimum processing delay │
│ for the TDCP report │
└─────────────────────────────────────────┘

516

┌─────────────────────────────────────────┐
│ Transmit the TDCP report to the network entity based │
│ on the measurement of the TDCP of the channel │
│ ┌─────────────────────────────────────┐ │
│ │ Transmit, to the network entity, at least one of an │ │
│ │ L1-RSRP report or an L1-SINR report for the │ │
│ │ TRS used to measure the TDCP of the channel │ │
│ │ 530 │ │
│ └─────────────────────────────────────┘ │
└─────────────────────────────────────────┘

# FIG. 5

EP 4 505 787 B1

600

606

Receive a UE capability report indicative of at least one of: a first UE capability for a measurement of a TDCP of a channel between a UE and the network entity or a second UE capability for TDCP reporting to a network entity of a TDCP report

608

Transmit a TDCP configuration based on the UE capability report—the TDCP configuration indicates a TDCP report structure for at least one of: a configured reporting quantity for the TDCP report, a CSI processing unit duration for the TDCP report, or a minimum processing delay for the TDCP report

610

Transmit, to the UE, a triggering indication for the TDCP report

612

Transmit a TRS to the UE through the channel between the UE and the network entity

616

Receive, from the UE based on the transmitted TRS, the TDCP report indicative of the measurement of the TDCP of the channel between the UE and the network entity—the measurement of the TDCP of the channel is associated with at least one of: the configured reporting quantity for the TDCP report, the CSI processing unit duration for the TDCP report, or the minimum processing delay for the TDCP report

Receive, from the UE, at least one of an L1-RSRP report or an L1-SINR report for the TRS used for the measurement of the TDCP of the channel
630

EP 4 505 787 B1

**FIG. 6**

FIG. 7

FIG. 8

**EP 4 505 787 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022162507 A
- US 2019165847 A
- WO 2017171928 A

**Non-patent literature cited in the description**

- **NOKIA et al.** CSI enhancement for high/medium UE velocities and CJT. *3GPP Draft - R1-2204540, 3rd Generation Partnership Project*, 09 May 2022, vol. RAN WG1 (e-Meeting)
- On Rel-18 CSI enhancements. *3GPP Draft; R1-2203443, 3rd Generation Partnership Project (CATT)*, 29 April 2022, vol. RAN WG1 (e-Meeting)